# EUROPÄISCHE PATENTSCHRIFT

(11) **EP 3 817 901 B1**
(45) Veröffentlichungstag und Bekanntmachung des Hinweises auf die Patenterteilung: **06.07.2022**
(21) Anmeldenummer: 19786566.0
(22) Anmeldetag: 09.10.2019
(51) Int. Cl.: B25J 15/04

(54) **KOPPLUNGSVORRICHTUNG**
COUPLING DEVICE
DISPOSITIF D'ACCOUPLEMENT

(30) Priorität: 26.10.2018 DE 102018218361
(43) Veröffentlichungstag der Anmeldung: 12.05.2021
(73) Patentinhaber: Festo SE & Co. KG, 73734 Esslingen (DE)
(72) Erfinder: AEGERTER, Markus, 73776 Altbach (DE)
(74) Vertreter: Patentanwälte Magenbauer & Kollegen Partnerschaft mbB
(86) Internationale Anmeldenummer: PCT/EP2019/077406
(87) Internationale Veröffentlichungsnummer: WO 2020/083652

(56) Entgegenhaltungen:
- DE-A1-102017 103 070
- DE-B3- 10 304 507

## Beschreibung

Die Erfindung betrifft eine Kopplungsvorrichtung, mit einer ersten Kopplungskomponente, in der eine eine zentrale Längsachse aufweisende Kopplungsausnehmung ausgebildet ist, in die eine zweite Kopplungskomponente unter Einnahme einer Gebrauchsstellung mit einem Kopplungszapfen axial einsteckbar ist, wobei die zweite Kopplungskomponente durch Verriegelungselemente, die eine bezüglich der zentralen Längsachse radiale Arbeitsbewegung ausführen können, in ihrer Gebrauchsstellung bezüglich der ersten Kopplungskomponente axial unbeweglich lösbar verriegelbar ist, und mit einer Antriebseinrichtung zur fluidbetätigten Steuerung der radialen Arbeitsbewegung der Verriegelungselemente.

Eine aus der EP 2 848 378 A1 bekannte Kopplungsvorrichtung dieser Art hat zwei Kopplungselemente, die zur Einnahme einer Gebrauchsstellung axial ineinander einsteckbar sind, wobei radial bewegliche Verriegelungselemente in der Lage sind, die beiden Kopplungskomponenten in der Gebrauchsstellung in lösbarer Weise axial unbeweglich aneinander zu fixieren. Der hauptsächliche Anwendungszweck der Kopplungsvorrichtung befindet sich auf dem Gebiet der Handhabungstechnik, wobei die eine Kopplungskomponente beispielsweise an einem Roboterarm angebracht ist und die andere Kopplungskomponente als Träger für einen Endeffektor, beispielsweise für eine Greifvorrichtung, fungiert. Die Kopplungsvorrichtung erlaubt es, den Endeffektor leicht auswechselbar am Roboterarm zu befestigen. Bei der bekannten Kopplungsvorrichtung sind zapfenförmige Verriegelungselemente im Kopplungsstutzen der einen Kopplungskomponente radial bewegbar angeordnet und mittels eines pneumatisch betätigbaren Kolbens unter Zwischenschaltung eines Keilgetriebes zu einer Arbeitsbewegung antreibbar, im Rahmen derer sie bezüglich der anderen Kopplungskomponente wahlweise in einer Verriegelungsstellung oder in einer Freigabestellung positionierbar sind.

Aus der DE 10 2011 001 671 A1 ist eine Klemmeinrichtung bekannt, die mehrere um eine Durchbrechung eines Gehäuses herum verteilte Profilrollen aufweist, die zum axial unbeweglichen Festklemmen eines die Durchbrechung durchsetzenden, beispielsweise als Welle ausgebildeten Bauteils dienen. Das Festklemmen erfolgt unter Mitwirkung eines die Durchbrechung umschließenden Profilrollenhalters, durch den die Profilrollen an den Außenumfang des festzuklemmenden Bauteils andrückbar sind. Die Klemmwirkung resultiert daraus, dass sich die Profilrollen an geneigten Führungsflächen des Profilrollenhalters abstützen, an die sie durch einen axial wirkenden Klemmantrieb angedrückt werden.

Aus der DE 22 03 473 A ist eine in eine linear wirksame Betätigungsvorrichtung integrierte Verriegelungseinrichtung bekannt, die eine drehbare Verriegelungswelle aufweist, die in eine an einem Kolben angebrachten hohle Stange hineinragt, die eine Innenverzahnung aufweist. Innerhalb der hohlen Stange ist an der Verriegelungswelle ein mit einer Außenverzahnung versehener Schieber angebracht. Durch Verdrehen der Verriegelungswelle kann die rotative Relativposition der Außenverzahnung des Schiebers bezüglich der Innenverzahnung der Stange verändert und dadurch die Stange wahlweise blockiert oder für eine axiale Linearbewegung freigegeben werden.

DE 103 04 507 B3 offenbart eine Kopplungsvorrichtung, bei der Verriegelungselemente durch die rotative Bewegung einer Betätigungshülse radial verschoben werden.

DE 10 2017 103070 offenbart eine Kopplungsvorrichtung, bei der Verriegelungselemente durch die rotative Bewegung einer Betätigungshülse radial verschoben werden, mit einer fluidbetriebene Zahnstange zum Antrieb der Betätigungshülse, wobei die Hülse über eine axiale Welle und ein Zahnrad betrieben wird und der Verriegelungsmechanismus im Zapfen vorgesehen ist.

Der Erfindung liegt die Aufgabe zugrunde, eine Kopplungsvorrichtung zu schaffen, die sich bei kompaktem Aufbau und funktionssicherer Betriebsweise kostengünstig herstellen lässt.

Zur Lösung dieser Aufgabe ist vorgesehen,
- dass die erste Kopplungskomponente einen die Kopplungsausnehmung umschließenden Grundkörper aufweist, in dem mehrere um die Kopplungsausnehmung herum verteilte Verriegelungselemente aufgenommen sind, die jeweils im Rahmen einer radialen Arbeitsbewegung zwischen einer radial in die Kopplungsausnehmung hineinragenden und dabei mit einer Verriegelungsausnehmung des Kopplungszapfens der die Gebrauchsstellung einnehmenden zweiten Kopplungskomponente in Verriegelungseingriff stehenden Verriegelungsstellung und einer im Vergleich zu der Verriegelungsstellung radial nach außen verlagerten, das Herausziehen der zweiten Kopplungskomponente aus der Kopplungsausnehmung ermöglichenden Freigabestellung bewegbar sind,
- und dass die Antriebseinrichtung eine zu der Kopplungsausnehmung koaxiale, die Verriegelungselemente umschließende Betätigungshülse aufweist, die unter Ausführung einer rotativen Betätigungsbewegung relativ zu dem Grundkörper um die Längsachse der Kopplungsausnehmung hin und her verdrehbar ist und die an ihrer Innenumfangsfläche eine mit den Verriegelungselementen zusammenwirkende Betätigungsstruktur aufweist,
- wobei die Betätigungshülse außerdem einen Antriebszahnkranz aufweist, mit dem eine Zahnstange mindestens eines in dem Grundkörper linear verschiebbar gelagerten Antriebskolbens der Antriebseinrichtung in Verzahnungseingriff steht,
- wobei durch gesteuerte Fluidbeaufschlagung mittels eines in der ersten Kopplungskomponente ausgebildeten Fluidkanalsystems eine hin und her gehende lineare Antriebsbewegung des mindestens einen Antriebskolbens hervorrufbar ist, aus der aufgrund des Verzahnungseingriffes die rotative Betätigungsbewegung der Betätigungshülse resultiert,
- und wobei die Betätigungsstruktur der Betätigungshülse so gestaltet ist, dass sie abhängig von der Drehposition der Betätigungshülse entweder eine die Verriegelungselemente in die Verriegelungsstellung drückende Schubkraft erzeugt oder ein Zurückweichen der Verriegelungselemente aus der Verriegelungsstellung in die Freigabestellung gestattet.

Bei der erfindungsgemäßen Kopplungsvorrichtung erfolgt eine axial unbewegliche lösbare Verriegelung zwischen einer ersten Kopplungskomponente und einer zweiten Kopplungskomponente durch eine Mehrzahl von Verriegelungselementen, die in einem Grundkörper der ersten Kopplungskomponente um die darin ausgebildete Kopplungsausnehmung herum verteilt angeordnet sind und die mittels einer relativ zu dem Grundkörper verdrehbaren Betätigungshülse wahlweise in einer Verriegelungsstellung oder in einer Freigabestellung positionierbar sind. In der Verriegelungsstellung ragen die Verriegelungselemente von radial außen her in die Kopplungsausnehmung hinein, sodass sie axial verriegelnd in eine Verriegelungsausnehmung eingreifen können, die an dem in die Kopplungsausnehmung eingesteckten Kopplungszapfen der zweiten Kopplungskomponente ausgebildet ist. Zur Erzeugung oder Ermöglichung der Arbeitsbewegung zwischen der Freigabestellung und der Verriegelungsstellung ist eine sehr kompakt bauende Antriebseinrichtung vorhanden, die auf einer Verzahnungstechnik basiert, sodass trotz geringer Abmessungen hohe Betätigungskräfte erzielbar sind. Die lineare Antriebsbewegung jedes Antriebskolbens wird von der ihm zugeordneten Zahnstange mitgemacht und durch den Verzahnungseingriff mit dem Antriebszahnkranz in eine rotative Betätigungsbewegung der Betätigungshülse umgewandelt. Mit der Antriebseinrichtung lässt sich vorteilhaft eine Selbsthemmung verwirklichen, die die formschlüssige Verriegelung zwischen den beiden Kopplungskomponenten selbst bei einem Druckabfall des für die gesteuerte Fluidbeaufschlagung verwendeten Antriebsfluides aufrechterhält. Bevorzugt ist die Kopplungsvorrichtung von pneumatisch betätigbarer Bauart und mit Druckluft betreibbar. Sie kann allerdings auch zur Betätigung mit flüssigen Druckmedien ausgelegt werden.

Ein bevorzugtes Anwendungsfeld der Kopplungsvorrichtung ist die Handhabungstechnik. Bevorzugt hat die erste Kopplungskomponente eine erste Befestigungsschnittstelle, mit der sie an einer bewegbaren Komponente eines maschinellen Handhabungsgerätes anbringbar ist, beispielsweise am freien Ende eines Rotoberarms eines Roboters. Die zweite Kopplungskomponente hat zweckmäßigerweise eine zweite Befestigungsschnittstelle, die zur Befestigung eines Endeffektors ausgebildet ist, beispielsweise eines Greifers. Die Kopplungsvorrichtung erlaubt bei einerseits eine sichere und stabile Fixierung und andererseits einen schnellen Austausch des Endeffektors. Bei Bedarf kann die Kopplungsausnehmung derart axial durchgehend ausgeführt sein, dass durch sie hindurch Energieübertragungsleitungen verlegbar sind, beispielsweise Druckluftleitungen oder elektrische Leitungen, die für den Betrieb des angebauten Endeffektors notwendig oder zweckmäßig sind.

Vorteilhafte Weiterbildungen der Erfindung gehen aus den Unteransprüchen hervor.

Die bevorzugt als ein Bestandteil der Kopplungsvorrichtung ausgebildete zweite Kopplungskomponente verfügt zweckmäßigerweise über einen den Kopplungszapfen radial überragenden Flanschabschnitt, der in der eingesteckten Gebrauchsstellung einer axialen Vorderseite der ersten Kopplungskomponente vorgelagert ist und dabei insbesondere an einer vorderen Stirnfläche des Grundkörpers anliegt. Durch die Anlage des bevorzugt ringförmigen Flanschabschnittes an der vorderen Stirnfläche des Grundkörpers ist die Kopplungsvorrichtung in der Lage, sehr hohe Querkräfte zwischen den beiden Kopplungskomponenten zu übertragen.

Jeder Antriebskolben der Antriebseinrichtung ist zweckmäßigerweise so ausgerichtet, dass seine Antriebsbewegung in einer zu der zentralen Längsachse rechtwinkeligen Ebene verläuft. Sofern die Antriebseinrichtung, was vorteilhaft ist, über eine Mehrzahl von Antriebskolben verfügt, erstrecken sich selbige bevorzugt in ein und derselben zu der zentralen Längsachse rechtwinkeligen Ebene, die im Folgenden auch als Antriebsebene bezeichnet wird.

Als besonders zweckmäßig wird es erachtet, wenn die Antriebseinrichtung über drei Antriebskolben verfügt, die in dem Grundkörper rings um die Kopplungsausnehmung herum verteilt angeordnet sind, insbesondere in gleichmäßiger Verteilung. Zu Gunsten einer gleichmäßigen Kraftübertragung zwischen den Zahnstangen der Antriebskolben und dem Antriebszahnkranz der Betätigungshülse ist es jedenfalls vorteilhaft, wenn die Antriebseinrichtung über mehr als nur einen einzigen Antriebskolben verfügt, wobei beispielsweise auch nur zwei sich bezüglich der zentralen Längsachse diametral gegenüberliegende Antriebskolben vorhanden sein können oder aber auch mehr als drei Antriebskolben. Eine gleichmäßige Verteilung der mehreren Antriebskolben rings um die zentrale Längsachse der Kopplungsausnehmung herum ist vorteilhaft.

Als besonders zweckmäßig wird es angesehen, wenn jeder Antriebskolben Bestandteil eines in die zweite Kopplungskomponente integrierten doppeltwirkenden Arbeitszylinders ist. Jeder doppeltwirkende Arbeitszylinder hat einen in dem Grundkörper ausgebildeten Arbeitsraum, in dem der zugeordnete Antriebskolben linear verschiebbar aufgenommen ist und der von dem Antriebskolben axial in zwei Antriebskammern unterteilt ist, die jeweils zur wahlweisen Zufuhr oder Abfuhr eines Antriebsfluides mit dem Fluidkanalsystem verbunden sind.

Die doppeltwirkende Ausführung der Arbeitszylinder hat im Vergleich zu einer prinzipiell ebenfalls möglichen einfachwirkenden Ausführungsform den Vorteil, dass ein bistabiles Verhalten realisierbar ist, sodass der Antriebskolben im Falle eines Druckausfalls in jeder seiner beiden Hubendlagen verharrt. Eine der beiden Hubendlagen ist für die Freigabestellung verantwortlich, die andere Hubendlage für die Verriegelungsstellung. Die doppeltwirkende Ausgestaltung hat außerdem den Vorteil, dass verglichen mit einer im Prinzip ebenfalls möglichen einfachwirkenden Ausführungsform auf mechanische Rückstellfedern verzichtet werden kann, was die Störungsanfälligkeit auf einem niedrigen Niveau hält.

Das Fluidkanalsystem für die fluidbetätigte Steuerung der radialen Arbeitsbewegung der Verriegelungselemente enthält zweckmäßigerweise zwei in dem Grundkörper ausgebildete Ringkanäle, die jeweils mit einer eigenen, von außen her zugänglichen Anschlussöffnung verbunden sind und die außerdem mit jeweils einer der beiden Antriebskammern eines jeweiligen Arbeitszylinders kommunizieren. Die Ringkanäle sind koaxial zu der Kopplungsausnehmung in dem Grundkörper ausgebildet. Die Anschlussöffnungen sind insbesondere mit Anschlussmitteln ausgestattet, die das Anbringen von Fluidleitungen ermöglichen, durch die hindurch das Antriebsfluid zuführbar und abführbar ist.

Prinzipiell kann sich die in der Umfangsrichtung der zentralen Längsachse gemessene Länge des Antriebszahnkranzes auf den zur Erzeugung der Arbeitsbewegung der Verriegelungselemente benötigten Drehwinkel der Betätigungshülse beschränken. Sind mehrere Antriebskolben vorhanden, deren Zahnstangen mit dem Antriebszahnkranz in Eingriff stehen, kann der Antriebszahnkranz in seiner Längsrichtung segmentiert sein. Fertigungstechnisch besonders einfach und leicht zu montieren ist eine bevorzugte Ausführungsform, bei der der Antriebszahnkranz ringförmig in sich geschlossen ausgebildet ist und insbesondere an der radialen Außenumfangsfläche der Betätigungshülse in diesbezüglich koaxialer Ausrichtung angeordnet ist. Der Antriebszahnkranz ist bevorzugt ein integraler Bestandteil der Betätigungshülse.

Die mit den Verriegelungselementen zu deren Positionsvorgabe zusammenwirkende Betätigungsstruktur an der Innenumfangsfläche der Betätigungshülse weist zweckmäßigerweise zumindest eine der Anzahl der Antriebskolben entsprechende Anzahl von Betätigungsabschnitten auf, die untereinander bevorzugt identisch gestaltet sind. Jeder Betätigungsabschnitt hat eine in Richtung zur Kopplungsausnehmung hin offene Aufnahmevertiefung, die geeignet ist, das zugeordnete Verriegelungselement zur Ermöglichung der Freigabestellung aufzunehmen. Außerdem hat jeder Betätigungsabschnitt eine sich in der Umfangsrichtung der Betätigungshülse, das heißt in der Umfangsrichtung der zentralen Längsachse an die Aufnahmevertiefung anschließende Rampe, die eine der Kopplungsausnehmung zugewandte Rampenfläche aufweist, die sich mit einem gekrümmten Verlauf allmählich radial an die zentrale Längsachse der Kopplungsausnehmung annähert, je weiter sie sich in der Umfangsrichtung der zentralen Längsachse von der zugeordneten Aufnahmevertiefung entfernt. Das zugeordnete Verriegelungselement liegt in der Verriegelungsstellung an der Rampenfläche an, durch die es in die Verriegelungsstellung gedrückt wird. Bei der rotativen Betätigungsbewegung, ausgehend von der Freigabestellung der Verriegelungselemente, gleitet die Rampenfläche an den Verriegelungselementen ab, die dadurch aus der Aufnahmevertiefung hinaus verdrängt und in die Verriegelungsstellung verschoben werden.

Die Kopplungsvorrichtung ist bei einer bevorzugten Ausgestaltung mit einer Handbetätigungseinrichtung ausgestattet, die es ermöglicht, die Arbeitsbewegung der Verriegelungselemente alternativ zu der fluidbetätigten Antriebseinrichtung rein manuell hervorzurufen. Sowohl die Verriegelung als auch die Entriegelung kann manuell durchgeführt werden. Dies erleichtert Umrüstarbeiten bei drucklosem Fluidkanalsystem.

Die Handbetätigungseinrichtung verfügt vorzugsweise über einen an dem Grundkörper bezüglich der zentralen Längsachse der Kopplungsausnehmung drehbar gelagerten Handbetätigungsring, der mit der Betätigungshülse drehfest verbunden ist. Ein manuelles Verdrehen des Handbetätigungsringes hat hier unmittelbar die rotative Betätigungsbewegung der Betätigungshülse zur Folge.

Bei einer bevorzugten Ausgestaltung verfügt der Handbetätigungsring über einen den Grundkörper koaxial umschließenden ringförmigen Betätigungsabschnitt und außerdem über mindestens einen Mitnehmerarm, der ausgehend von dem ringförmigen Betätigungsabschnitt radial nach innen und in eine Aussparung der Betätigungshülse hineinragt. Zweckmäßig ist es, wenn an dem Betätigungsabschnitt mehrere über den Umfang verteilt angeordnete und speichenartig nach innen ragende Mitnehmerarme angeordnet sind.

Für die Verriegelungselemente empfiehlt sich vor allem eine kugelförmige Gestaltung. Als Verriegelungskugeln ausgebildete Verriegelungselemente können die Arbeitsbewegung besonders leichtgängig ausführen, da die Reibung relativ gering ist. Entsprechend reduziert ist auch die Verschleißanfälligkeit.

Denkbar wäre aber beispielsweise auch eine zylindrische Formgebung.

Jedes Verriegelungselement ist vorzugsweise in einem bezüglich der zentralen Längsachse radial orientierten Führungskanal des Grundkörpers so gelagert, dass es die bezüglich der zentralen Längsachse radiale Arbeitsbewegung ausführen kann und gleichzeitig seitlich abgestützt ist. Die Verriegelungselemente sind untereinander nicht gekoppelt, sodass sie ihre Arbeitsbewegung unabhängig voneinander ausführen können.

Die mehreren Antriebskolben sind zweckmäßigerweise synchron betätigbar, sodass ihre Zahnstangen die fluidisch erzeugte Antriebskraft gleichzeitig in den Antriebszahnkranz und folglich in die Betätigungshülse einleiten.

Jeder Antriebskolben ist vorzugsweise so gestaltet, dass er einen Kolbenkörper hat, in den die zugeordnete Zahnstange integriert ist, insbesondere durch einstückige Ausgestaltung. Die Zahnstange kann alternativ auch als separates Bauteil am Antriebskolben befestigt sein.

Die Kopplungsvorrichtung verfügt zweckmäßigerweise über Verbindungsmittel, die eine Fluidübertragung und/oder eine Übertragung elektrischer Ströme zwischen den beiden miteinander gekoppelten Kopplungselementen ermöglichen. Dadurch kann ein Endeffektor mit Energie und/oder Signalen versorgt werden, ohne darauf angewiesen zu sein, Fluidleitungen und/oder elektrische Leitungen bei einem Wechsel des Endeffektors händisch zu manipulieren.

In diesem Zusammenhang ist es vorteilhaft, wenn die erste Kopplungskomponente im Bereich einer axialen Vorderseite über elektrische und/oder fluidische Verbindungselemente verfügt, die mit elektrischen bzw. fluidischen Gegen-Verbindungselementen der durch die Verriegelungselemente in der eingesteckten Gebrauchsstellung verriegelten ersten Kopplungskomponente verbunden sind. Die Verbindungselemente und Gegen-Verbindungselemente können beispielsweise als Steckverbindungselemente ausgeführt sein.

Besonders vorteilhaft ist es, wenn die elektrischen und/oder fluidischen Verbindungselemente an einem zu der Kopplungsausnehmung koaxialen ringförmigen Verbindungselementeträger angeordnet sind, der bezüglich des Grundkörpers in dessen axialer Richtung unter Ausführung einer axialen Hubbewegung bewegbar ist. Es handelt sich hierbei vorzugsweise um eine reine Linearbewegung ohne überlagerte Rotationsbewegung. Der Verbindungselementeträger kann unter Ausführung der axialen Hubbewegung zwischen einer Grundstellung und einer Verbindungsstellung verlagert werden. In der Grundstellung sind die an ihm angeordneten elektrischen und/oder fluidischen Verbindungselemente in den Grundkörper eingefahren und somit vor Beschädigungen geschützt. In der Verbindungsstellung sind die elektrischen und/oder fluidischen Verbindungselemente aus dem Grundkörper axial ausgefahren, sodass sie die gewünschte Verbindung mit den Gegen-Verbindungselementen der zweiten Kopplungskomponente eingehen können. Vorteilhaft ist es, wenn der Verbindungselementeträger derart antriebsmäßig mit der Betätigungshülse gekoppelt ist, dass die axiale Hubbewegung des Verbindungselementeträgers aus der rotativen Betätigungsbewegung der Betätigungshülse abgeleitet wird.

Die Betätigungshülse ist durch die rotative Betätigungsbewegung wahlweise in einer Offenstellung oder in einer Schließstellung positionierbar. In der Offenstellung können die Verriegelungselemente die Freigabestellung einnehmen. In der Schließstellung sind die Verriegelungselemente in die Verriegelungsstellung gedrückt. Der Verbindungselementeträger ist mit der Betätigungshülse insbesondere so gekoppelt, dass er in der Offenstellung der Betätigungshülse die Grundstellung und in der Schließstellung der Betätigungshülse die Verbindungsstellung einnimmt.

Eine einfache und platzsparende Erzeugung der axialen Hubbewegung des Verbindungselementeträgers ist möglich, wenn an der Betätigungshülse mindestens ein wendelförmiger erster Kopplungsabschnitt ausgebildet ist, mit dem mindestens ein an dem Verbindungselementeträger ausgebildeter wendelförmiger zweiter Kopplungsabschnitt in Eingriff steht, wobei der Verbindungselementeträger bezüglich des Grundkörpers verdrehgesichert ist, sodass er um die zentrale Längsachse nicht verdreht werden kann. Auf diese Weise ruft die rotative Betätigungsbewegung der Betätigungshülse einen die axiale Hubbewegung des Verbindungselementeträgers erzeugenden Schraubvorgang hervor.

Von den beiden Kopplungsabschnitten ist der eine zweckmäßigerweise jeweils als Nut und der andere jeweils als Vorsprung ausgebildet.

Die zweite Kopplungskomponente ist besonders einfach herstellbar, wenn der Grundkörper mehrteilig ausgebildet ist und über ein ringförmiges Gehäuse sowie eine koaxial in das Gehäuse eingesetzte Flanschhülse verfügt. Die Flanschhülse hat einen dem Gehäuse axial vorgelagerten Flanschabschnitt, über den sie an dem Gehäuse befestigt ist. Sie hat außerdem einen in das Gehäuse eintauchenden Hülsenabschnitt, der radial von Führungskanälen für die Führungselemente durchsetzt ist. Koaxial zwischen dem Hülsenabschnitt und dem Gehäuse sitzt die drehbare Betätigungshülse. Die Führungskanäle sind so ausgeführt, dass die Verriegelungselemente bei Einnahme der Verriegelungsstellung zwar radial herausragen, jedoch nicht herausfallen können.

Die Kopplungsvorrichtung lässt sich zumindest überwiegend aus Kunststoff herstellen, was ein geringes Gewicht mit sich bringt und folglich bei mobilen Anwendungen zu einer Reduzierung der bewegten Masse beiträgt.

Nachfolgend wird die Erfindung anhand der beiliegenden Zeichnung näher erläutert. In dieser zeigen:
- Figur 1: eine bevorzugte Ausgestaltung der erfindungsgemäßen Kopplungsvorrichtung in einer perspektivischen Darstellung mit Blick auf die Vorderseite im in der Gebrauchsstellung befindlichen Zustand der zweiten Kopplungskomponente,
- Figur 2: die Kopplungsvorrichtung aus Figur 1 in einer perspektivischen Darstellung mit Blick auf die Rückseite,
- Figur 3: eine Unteransicht der Kopplungsvorrichtung aus Figuren 1 und 2,
- Figur 4: eine Draufsicht der Kopplungsvorrichtung aus Figuren 1 und 2,

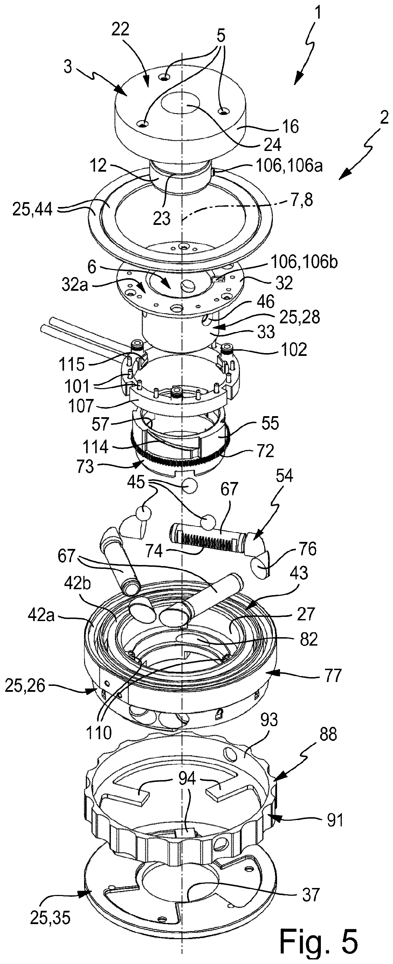

- Figur 5: eine perspektivische Explosionsdarstellung der Kopplungsvorrichtung aus Figuren 1 bis 4,

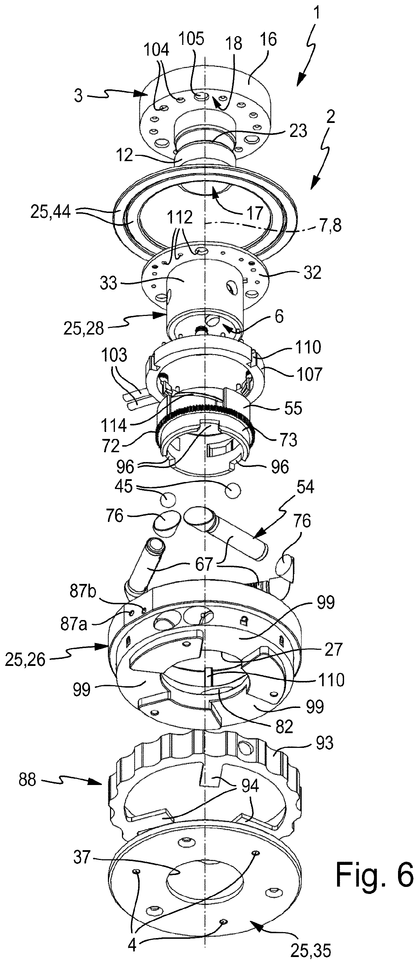

- Figur 6: eine weitere perspektivische Explosionsdarstellung der Kopplungsvorrichtung aus einem anderen Blickwinkel,

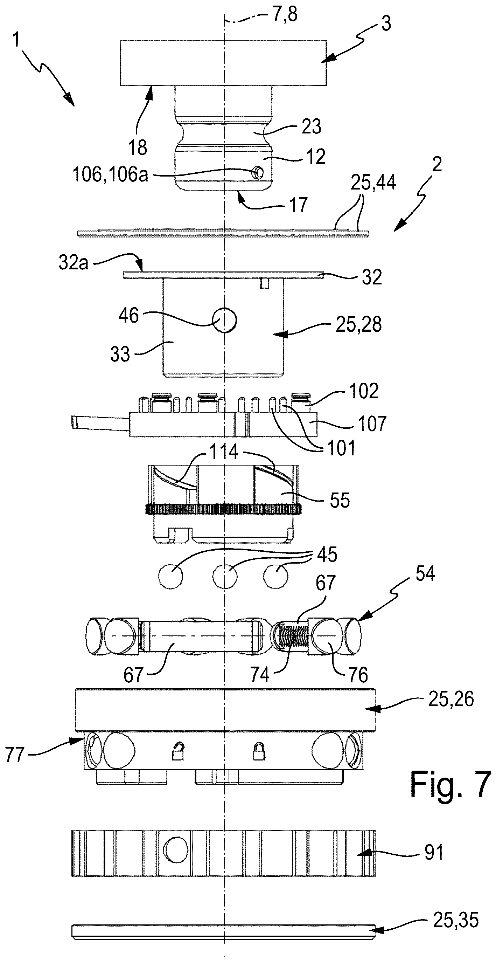

- Figur 7: die Explosionsdarstellungen der Figuren 5 und 6 in einer orthogonalen Seitenansicht,

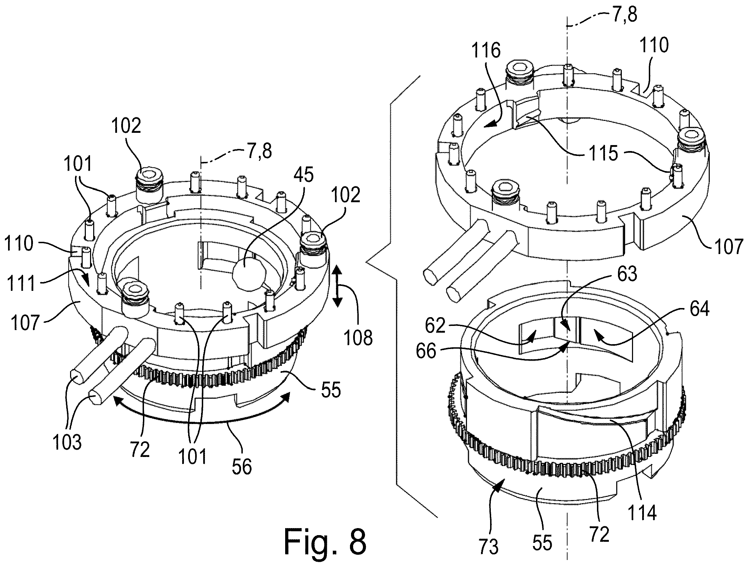

- Figur 8: in der linken Bildhälfte eine Einzeldarstellung einer Baugruppe bestehend aus der Betätigungshülse und einem mit Verbindungselementen ausgestatteten Verbindungselementeträger, wobei diese beiden Komponenten in der rechten Bildhälfte der Figur 8 in einer Explosionsdarstellung gezeigt sind,

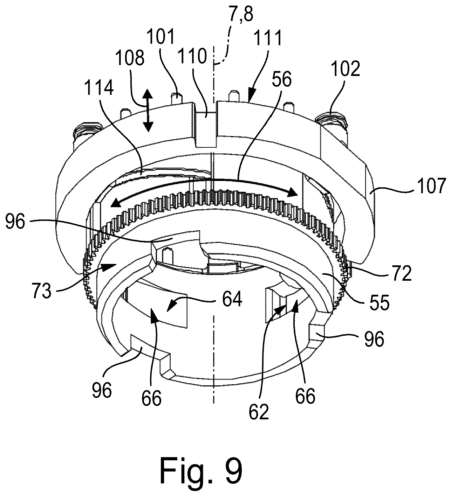

- Figur 9: die Baugruppe aus Figur 8 in einer isometrischen Unteransicht,
- Figur 10: einen Längsschnitt der Kopplungsvorrichtung gemäß Schnittlinie X-X aus Figur 4, wobei die Betätigungshülse in der Schließstellung und die Verriegelungselemente in der Verriegelungsstellung gezeigt sind,
- Figur 11: einen Querschnitt gemäß Schnittlinie XI-XI aus Figur 10,
- Figur 12: einen Querschnitt gemäß Schnittlinie XII-XII aus Figur 10,
- Figur 13: einen Querschnitt gemäß Schnittlinie XIII-XIII aus Figur 10,
- Figur 14: die Kopplungsvorrichtung der Figuren 1 bis 13 im voneinander getrennten Zustand der beiden Kopplungskomponenten in einer perspektivischen Darstellung,
- Figur 15: die Anordnung aus Figur 14 in einem Längsschnitt vergleichbar der Figur 10, wobei die Betätigungshülse in der Offenstellung und die Verriegelungselemente in der Freigabestellung gezeigt sind,
- Figur 16: einen Querschnitt gemäß Schnittlinie XVI-XVI aus Figur 15, und
- Figur 17: einen Querschnitt gemäß Schnittlinie XVII-XVII aus Figur 15.

Die in ihrer Gesamtheit mit Bezugsziffer 1 bezeichnete Kopplungsvorrichtung enthält eine erste Kopplungskomponente 2, mit der eine zweite Kopplungskomponente 3 durch Verriegelung in lösbarer Weise mechanisch koppelbar ist. Die zweite Kopplungskomponente 3 ist zweckmäßigerweise ebenfalls ein Bestandteil der Kopplungsvorrichtung 1.

Die erste Kopplungskomponente 2 weist zweckmäßigerweise eine erste Befestigungsschnittstelle 4 auf, mit der sie an einer beliebigen Tragstruktur befestigt werden kann, insbesondere in lösbarer Weise. Die Tragstruktur ist zweckmäßigerweise bewegbar, sodass die daran befestigte erste Kopplungskomponente 2 ebenfalls bewegt und nach Bedarf positioniert werden kann. Insbesondere handelt es sich bei der Tragstruktur 4 um ein Handhabungsgerät, beispielsweise um einen Roboter und dabei insbesondere um den beweglichen Roboterarm eines Roboters.

Die zweite Kopplungskomponente 3 ist zweckmäßigerweise mit einer zweiten Befestigungsschnittstelle 5 ausgestattet, mit deren Hilfe an der zweiten Kopplungskomponente 3 eine weitere Komponente, insbesondere ein Endeffektor befestigt werden kann. Bei dem Endeffektor handelt es sich beispielsweise um eine Greifvorrichtung, mit der sich umzupositionierende Objekte ergreifen und zeitweilig festhalten lassen. Der Endeffektor kann Mittel haben, die elektrisch und/oder fluidisch betätigbar sind.

In der ersten Kopplungskomponente 2 ist eine Kopplungsausnehmung 6 ausgebildet, die eine zentrale Längsachse 7 hat, die gleichzeitig eine Längsachse der gesamten ersten Kopplungskomponente 2 bildet.

Die zweite Kopplungskomponente 3 hat eine Längsachse 8 und verfügt über einen außen bevorzugt kreiszylindrisch gestalteten Kopplungszapfen 12, der koaxial zu der Längsachse 8 ausgerichtet ist.

Die erste Kopplungskomponente 2 hat eine in der Achsrichtung der Längsachse 7 orientierte axiale Vorderseite 13 und eine diesbezüglich axial entgegengesetzt orientierte axiale Rückseite 14. Die Kopplungsausnehmung 6 mündet an der axialen Vorderseite 13 mit einer Einstecköffnung 15 aus. Bevorzugt ist die erste Kopplungskomponente 2 von der Kopplungsausnehmung 6 vollständig durchsetzt, sodass selbige auch an der Rückseite 14 der ersten Kopplungskomponente 2 offen ist.

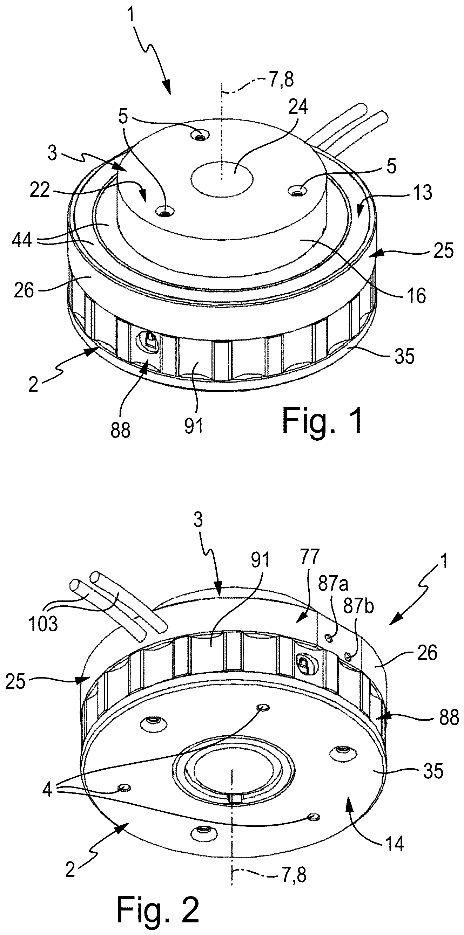

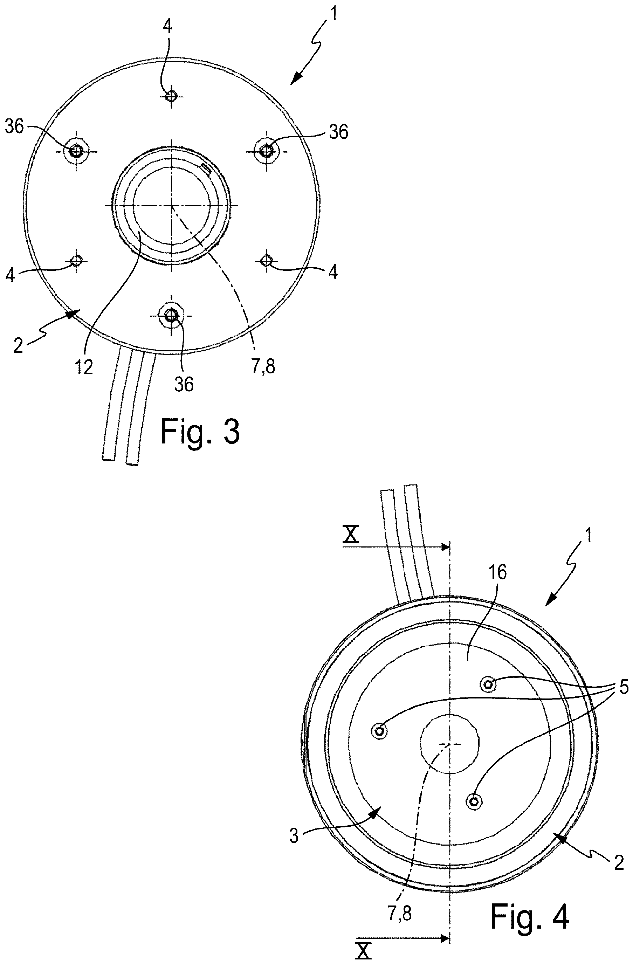

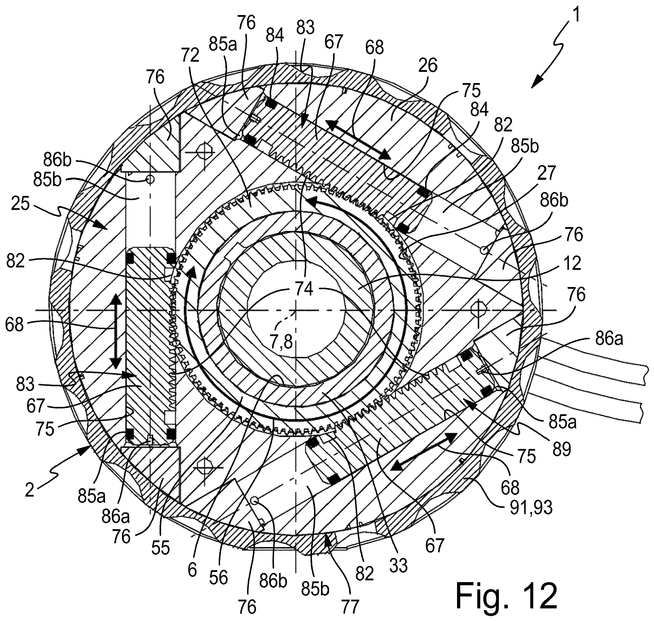

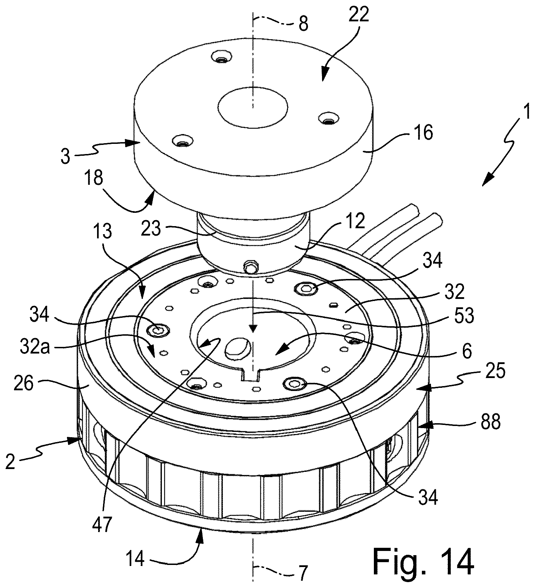

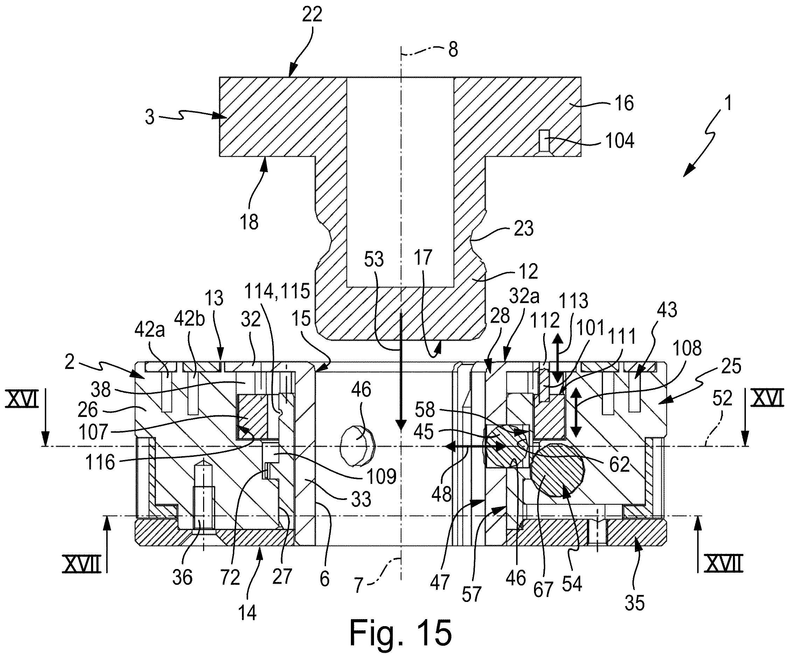

Die zweite Kopplungskomponente 3 kann eine aus Figuren 14 und 15 ersichtliche Bereitschaftsstellung einnehmen, in der sie mit der ersten Kopplungskomponente 2 nicht vereinigt ist und völlig unabhängig von der ersten Kopplungskomponente 2 gehandhabt werden kann. Andererseits kann die zweite Kopplungskomponente 3 eine aus Figuren 1 bis 4 und 10 bis 13 ersichtliche Gebrauchsstellung einnehmen, in der sie mit ihrem Kopplungszapfen 12 durch die Einstecköffnung 15 hindurch in die Kopplungsausnehmung 6 der ersten Kopplungskomponente 2 eingesteckt ist.

Die Einstecktiefe der zweiten Kopplungskomponente 3 bezüglich der ersten Kopplungskomponente 2 ist zweckmäßigerweise durch einen den Kopplungszapfen 12 radial überragenden Flanschabschnitt 16 der zweiten Kopplungskomponente 3 vorgegeben, der in der Gebrauchsstellung an der axialen Vorderseite 13 der ersten Kopplungskomponente 2 anliegt. Der Flanschabschnitt 16 ist bevorzugt scheibenförmig gestaltet und hat einen größeren Außendurchmesser als der Kopplungszapfen 12, der von dem Flanschabschnitt 16 axial absteht.

In der Gebrauchsstellung ist die zweite Kopplungskomponente 3 mit der dem Flanschabschnitt 16 entgegengesetzten Vorderseite 17 des Kopplungszapfens 12 voraus in die Kopplungsausnehmung 6 eingesteckt, sodass der Flanschabschnitt 16 mit einer dem Kopplungszapfen 12 zugewandten ringförmigen vorderen Stirnfläche 18 an der axialen Vorderseite 13 der ersten Kopplungskomponente 2 anliegt.

Die zweite Befestigungsschnittstelle 5 befindet sich bevorzugt an der dem Kopplungszapfen 12 axial abgewandten Rückseite 22 des Flanschabschnittes 16. Die erste Befestigungsschnittstelle 4 ist bevorzugt an der axialen Rückseite 14 der ersten Kopplungskomponente 2 ausgebildet.

Im Bereich seines radialen Außenumfangs hat der Kopplungszapfen 12 mindestens eine Verriegelungsausnehmung 23, die beim Ausführungsbeispiel von einer zu der Längsachse 8 koaxialen Ringnut gebildet ist. Die Verriegelungsausnehmung 23 kann sich aber beispielsweise auch aus mehreren in der Umfangsrichtung der Längsachse 8 zueinander beabstandeten Ausnehmungsabschnitten zusammensetzen.

In der Gebrauchsstellung der zweiten Kopplungskomponente 3 liegt die Verriegelungsausnehmung 23 mit axialem Abstand zur sowohl der Vorderseite 13 als auch der Rückseite 14 im Innern der Kopplungsausnehmung 6.

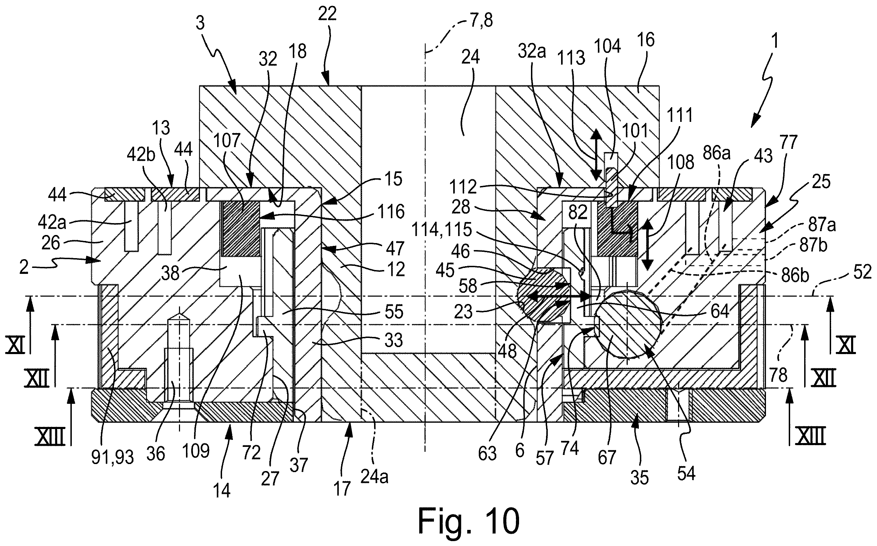

Die zweite Kopplungskomponente 3 hat zweckmäßigerweise eine zentral angeordnete, zu der Rückseite 22 hin offene Mittelbohrung 24. Sie ist exemplarisch als Sackbohrung ausgeführt. In Figur 10 ist strichpunktiert bei 24a angedeutet, dass die Mittelbohrung 24 alternativ auch axial durchgehend ausgebildet sein kann, sodass sie sowohl zu der Rückseite 22 als auch zu der Vorderseite 17 ausmündet. Dies ermöglicht durch die Kopplungsvorrichtung 1 hindurch ein Hindurchführen von Leitungen und/oder Kabeln, die für eine fluidische und/oder elektrische Energieübertragung und/oder Signalübertragung genutzt werden können.

Die erste Kopplungskomponente 2 hat einen die Kopplungsausnehmung 6 umschließenden Grundkörper 25. Der Grundkörper 25 ist bevorzugt ringförmig ausgebildet.

Der Grundkörper 25 hat zweckmäßigerweise einen mehrteiligen Aufbau. Bei dem illustrierten bevorzugten Ausführungsbeispiel hat er ein ringförmiges Gehäuse 26, das mittig von einer axialen Gehäusebohrung 27 durchsetzt ist. Außerdem verfügt es über eine Flanschhülse 28 mit einem ringscheibenförmigen Flanschabschnitt 32 und einem einseitig von dem Flanschabschnitt 32 koaxial abstehenden Hülsenabschnitt 33. Die Flanschhülse 28 ist mit dem Hülsenabschnitt 33 voraus von der Vorderseite 13 her in die Gehäusebohrung 27 eingesteckt, sodass der Flanschabschnitt 32 im Bereich der axialen Vorderseite 13 an der dortigen Stirnfläche des Gehäuses 26 anliegt. Mittels mehrerer Befestigungsschrauben 34, die den Flanschabschnitt 32 durchsetzen und in das Gehäuse 26 eingeschraubt sind, ist die Flanschhülse 28 am Gehäuse 26 befestigt. Die Länge des Hülsenabschnittes 33 ist zweckmäßigerweise so gewählt, dass selbiger an der dem Flanschabschnitt 32 entgegengesetzten Stirnseite bündig mit der axialen Rückseite 14 der ersten Kopplungskomponente 2 abschließt.

Diese axiale Rückseite 14 ist exemplarisch von einer ringscheibenförmigen Abdeckplatte 35 des Grundkörpers 25 gebildet, die im Bereich der axialen Rückseite 14 an die dortige Stirnfläche des Gehäuses 26 angesetzt ist und die mittels sie durchsetzender Befestigungsschrauben 36 mit dem Gehäuse 26 verschraubt ist.

Eine die Abdeckplatte 35 zentral durchsetzende Durchbrechung 37 fluchtet mit der Gehäusebohrung 27, hat jedoch einen kleineren Durchmesser als der kleinste Durchmesser der Gehäusebohrung 27. Der Hülsenabschnitt 33 taucht beispielhaft mit seinem Endabschnitt in die Durchbrechung 37 der Abdeckplatte 35 ein.

Der Durchmesser der Gehäusebohrung 27 ist größer als der Außendurchmesser des sich in der Gehäusebohrung 27 erstreckenden Hülsenabschnittes 33 der Flanschhülse 28. Dadurch ergibt sich zwischen diesen beiden Bestandteilen ein zu der Längsachse 8 koaxialer ringförmiger Zwischenraum 38.

In dem Grundkörper 25 sind zweckmäßigerweise zwei zu der zentralen Längsachse 7 koaxial angeordnete erste und zweite Ringkanäle 42a, 42b ausgebildet. Diese beiden Ringkanäle 42a, 42b liegen exemplarisch bezogen auf die Achsrichtung der Längsachse 7 auf gleicher Höhe, sodass sie sich mit radialem Abstand konzentrisch umschließen. Die Ringkanäle 42a, 42b gehören zu einem noch zu erläuternden Fluidkanalsystem 43, das in dem Grundkörper 25 ausgebildet ist.

Bevorzugt bestehen die beiden Ringkanäle jeweils aus einer von der axialen Vorderseite 13 her in den Grundkörper 25 eingelassenen Ringnut, die jeweils durch einen vorne an dem Gehäuse 26 befestigten Verschlussring 44 axial verschlossen sind, wobei jeder Verschlussring 44 einen weiteren Bestandteil des Grundkörpers 25 bildet. Anstelle zweier separater Verschlussringe 44 kann auch nur ein einziger Verschlussring vorgesehen sein. Jeder Verschlussring 44 ist zweckmäßigerweise ringscheibenförmig gestaltet.

In dem Grundkörper 25 sind mehrere um die Kopplungsausnehmung 6 herum verteilt angeordnete Verriegelungselemente 45 angeordnet. Selbige sind bevorzugt kugelförmig ausgebildet, sodass man sie auch als Verriegelungskugeln bezeichnen kann. Die mehreren Verriegelungselemente 45 sind insbesondere in gleichmäßigen Abständen rings um die zentrale Längsachse 7 herum verteilt. Das illustrierte bevorzugte Ausführungsbeispiel verfügt über insgesamt drei solcher Verriegelungselemente 45.

Jedes Verriegelungselement 45 sitzt in einem die Wandung des Hülsenabschnittes 33 der Flanschhülse 28 durchsetzenden, bezüglich der Längsachse 7 radial ausgerichteten Führungskanal 46. Exemplarisch besteht jeder Führungskanal 46 aus einer kreisförmigen Wanddurchbrechung des Hülsenabschnittes 33.

Die Innenumfangsfläche des Hülsenabschnittes 33 bildet die radiale Begrenzungsfläche 47 der Kopplungsausnehmung 6. Sie hat eine kreiszylindrische Gestalt. Jeder Führungskanal 46 mündet einerseits an der radialen Begrenzungsfläche 47 in die Kopplungsausnehmung 6 aus und andererseits in den den Hülsenabschnitt 33 umschließenden ringförmigen Zwischenraum 38.

Jedes Verriegelungselement 45 ist im zugeordneten Führungskanal 46 derart in der Längsrichtung des Führungskanals 46 beweglich gelagert, dass es eine durch einen Doppelpfeil angedeutete, hin und her gehende Arbeitsbewegung 48 relativ zum Grundkörper 25 in der bezüglich der Längsachse 7 radialen Richtung ausführen kann.

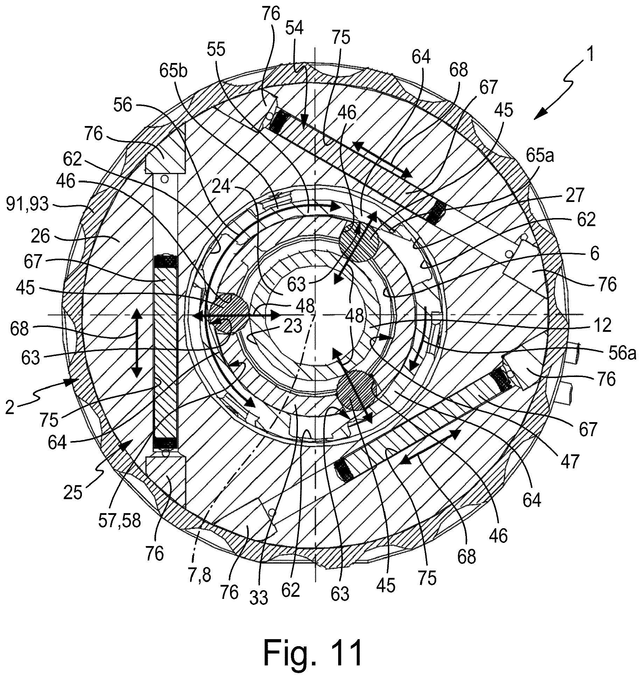

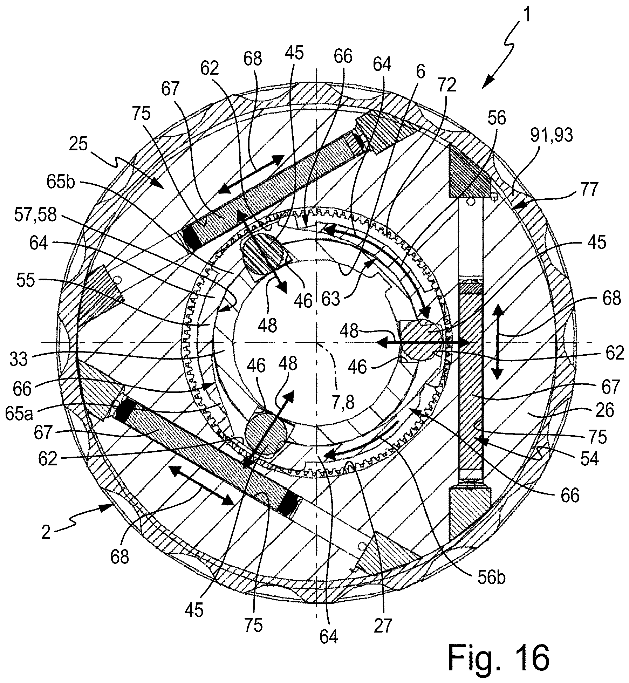

Im Rahmen dieser Arbeitsbewegung 48 kann jedes Verriegelungselement 45 alternativ in einer aus Figuren 10 und 11 hervorgehenden Verriegelungsstellung oder in einer aus Figuren 15 und 16 ersichtlichen Freigabestellung positioniert werden.

In der Verriegelungsstellung ragen die Verriegelungselemente 45 mit einem Abschnitt ihres Umfangs aus dem Führungskanal 46 heraus und in die Kopplungsausnehmung 6 hinein. Sie stehen dann über die radiale Begrenzungsfläche 47 über. Wenn die zweite Kopplungskomponente 3 gleichzeitig die Gebrauchsstellung einnimmt, greifen die Verriegelungselemente 45 von radial außen her in die Verriegelungsausnehmung 23 ein, die im eingesteckten Zustand des Kopplungszapfens 12 in ein und derselben, zu der Längsachse 7 rechtwinkeligen Verriegelungsebene 52 liegt wie die Verriegelungselemente 45.

Durch den Eingriff der Verriegelungselemente 45 in die Verriegelungsausnehmung 23 liegt zwischen den Verriegelungselementen 45 und dem Kopplungszapfen 12 in der Achsrichtung der Längsachse 7 ein Formschluss vor, durch den die zweite Kopplungskomponente 3 bezüglich der ersten Kopplungskomponente 2 axial unbeweglich verriegelt ist.

In der Freigabestellung haben die Verriegelungselemente 45 einen größeren Abstand zu der zentralen Längsachse 7 als in der Verriegelungsstellung. Sie sind im zugeordneten Führungskanal 46 nach radial außen verlagert, sodass sie nicht mehr in die Kopplungsausnehmung 6 hineinragen. Beim Ausführungsbeispiel ragen sie nun in den ringförmigen Zwischenraum 38 hinein.

Beim Ausführungsbeispiel ragen die Verriegelungselemente 45 auch in der Verriegelungsstellung geringfügig in den ringförmigen Zwischenraum 38 hinein, wobei sie aber in der Freigabestellung im Vergleich zur Verriegelungsstellung in einem größeren Ausmaß in den ringförmigen Zwischenraum 38 hineinragen.

In der Freigabestellung ist der radiale Eingriff der Verriegelungselemente 45 bezüglich des Kopplungszapfens 12 aufgehoben, sodass die zweite Kopplungskomponente 3 nach Belieben aus der Kopplungsausnehmung 6 axial herausgezogen oder auch gemäß Pfeil 53 in Figuren 14 und 15 aus der zuvor eingenommenen Bereitschaftsstellung in die Gebrauchsstellung eingesteckt werden kann.

Die Führungskanäle 46 haben in Richtung zur Kopplungsausnehmung 6 zweckmäßigerweise eine leichte Verjüngung, sodass die Verriegelungselemente 45 nicht in die Kopplungsausnehmung 6 hinein herausfallen können.

Die erste Kopplungskomponente 2 ist mit einer mehrteiligen Antriebseinrichtung 54 ausgestattet, durch die eine fluidbetätigte Steuerung der radialen Arbeitsbewegung 48 der Verriegelungselemente 45 möglich ist.

Zu der Antriebseinrichtung 54 gehört eine koaxial zu der Kopplungsausnehmung 6 angeordnete Betätigungshülse 55, die die Anordnung von Verriegelungselementen 45 umschließt. Exemplarisch sitzt die Betätigungshülse 55 koaxial in dem ringförmigen Zwischenraum 38. Ihre Längsachse fällt mit der Längsachse 7 zusammen, wobei sie in der Lage ist, eine durch einen Doppelpfeil angedeutete rotative Betätigungsbewegung 56 relativ zu dem Grundkörper 25 und den in den Führungskanälen 46 abgestützten Verriegelungselementen 45 auszuführen. Die Drehachse der rotativen Betätigungsbewegung 56 fällt mit der zentralen Längsachse 7 zusammen. Es ist eine hin und her gerichtete Rotationsbewegung möglich, also eine rotative Betätigungsbewegung 56 sowohl im Uhrzeigersinn als auch entgegen dem Uhrzeigersinn. An ihrer den Verriegelungselementen 45 zugewandten Innenumfangsfläche 57 weist die Betätigungshülse 55 eine Betätigungsstruktur 58 auf, die in der Lage ist, mit den Verriegelungselementen 45 kraftübertragend zusammenzuwirken.

Durch die in einer Öffnungsrichtung 56b erfolgende Betätigungsbewegung 56 kann die Betätigungshülse 55 in einer als Offenstellung bezeichneten rotativen Relativposition bezüglich des Grundkörpers 25 positioniert werden, die in den Figuren 15 und 16 illustriert ist. In dieser Offenstellung ist im Bereich jedes Verriegelungselementes 45 eine zur Längsachse 7 hin offene Aufnahmevertiefung 62 der Betätigungsstruktur 58 positioniert, die dem jeweils zugeordneten Verriegelungselement 45 ein radiales Zurückweichen in die Freigabestellung ermöglicht. Die Anzahl der Aufnahmevertiefungen 62 und deren winkelmäßige Verteilung um die zentrale Längsachse 7 herum entspricht derjenigen der Verriegelungselemente 45.

Durch die in einer Schließrichtung 56a erfolgende Betätigungsbewegung 56 kann die Betätigungshülse 55 außerdem in mindestens einer als Schließstellung bezeichneten rotativen Relativposition bezüglich des Grundkörpers 25 positioniert werden, die sich drehwinkelmäßig von der Offenstellung unterscheidet. Eine solche Schließstellung ist in den Figuren 10 und 11 illustriert. Hierbei stützt sich, an der der Längsachse 7 radial entgegengesetzten Rückseite jedes Verriegelungselementes 45, die der Längsachse 7 zugewandte Rampenfläche 63 einer zu der Betätigungsstruktur 58 gehörenden Rampe 64 ab.

Jede Rampe 64 schließt sich in der Umfangsrichtung der Betätigungshülse 55 an eine der Aufnahmevertiefungen 62 an. Die Rampenfläche 63 ist so gestaltet, dass sie an einem der Aufnahmevertiefung 62 benachbarten ersten Endbereich 65a der Rampe 64 in bezüglich der Längsachse 7 radialer Richtung auf gleicher Höhe mit der Grundfläche der benachbarten Aufnahmevertiefung 62 angeordnet ist oder diesbezüglich nur geringfügig in Richtung zu der Längsachse 7 beabstandet ist. Dadurch kann das in der Aufnahmevertiefung 62 sitzende Verriegelungselement 45 bei einer in der Schließrichtung 56a erfolgenden rotativen Betätigungsbewegung 56 problemlos auf die Rampenfläche 63 gelangen.

Ausgehend von dem ersten Endbereich 65a nähert sich die Rampenfläche 63 mit in der Umfangsrichtung der Längsachse 7 zunehmender Entfernung von der Aufnahmevertiefung 62 an die zentrale Längsachse 7 an. Anders ausgedrückt, wird die Rampe 64 ausgehend von dem ersten Endbereich 65a in Richtung zu einem zweiten Endbereich 65b zunehmend höher. Dies kann mit dem Verlauf einer schiefen Ebene verglichen werden. Allerdings ist die Rampenfläche 63 in ihrer Längsrichtung konkav gekrümmt.

Ein Verdrehen der Betätigungshülse 55 aus der Offenstellung in die Schließstellung hat zur Folge, dass an der Rückseite jedes Verriegelungselementes 45 eine der Rampenflächen 63 in der Umfangsrichtung der Längsachse 7 vorbei bewegt wird, wobei sich das Verriegelungselement 45 an der Rampenfläche 63 abwälzt. Aufgrund der zunehmenden Erhöhung der Rampe 64 wird das Verriegelungselement 45 mit einer Schubkraft beaufschlagt, durch die es unter Ausführung einer Arbeitsbewegung 48 in die Verriegelungsstellung gemäß Figuren 10 und 11 gedrückt wird. Am Ende der Schließbewegung 56a liegt die aus Figuren 10 und 11 ersichtliche Schließstellung der Betätigungshülse 55 vor.

Um die Verriegelung zu lösen, genügt es, die Betätigungshülse 55 gemäß Figur 16 in der der Schließrichtung 56a entgegengesetzten Öffnungsrichtung 56b zu verdrehen. Dadurch gelangt die Rampenfläche 63 zunehmend außer Eingriff mit dem Verriegelungselement 45, bis Letzteres schließlich nach Überschreiten des ersten Endbereiches 65a der Rampe 64 in die sich daran anschließende Aufnahmevertiefung 62 zurückweichen kann. Die Betätigungshülse 55 nimmt nun die Offenstellung ein, die ein Einstecken und Herausziehen der zweiten Kopplungskomponente 3 gestattet.

Das Zurückweichen der Verriegelungselemente 45 in die Aufnahmevertiefungen 62 beim Herausziehen der zweiten Kopplungskomponente 3 aus der Gebrauchsstellung wird dadurch verursacht, dass die Nutflanke der Verriegelungsausnehmung 23 von radial innen her auf die Verriegelungselemente 45 einwirkt und selbige nach außen drückt. Ein vergleichbarer Effekt stellt sich ein, wenn die zweite Kopplungskomponente 3 aus der Bereitschaftsstellung in die Gebrauchsstellung eingesteckt wird und die Verriegelungselemente 45 eventuell noch in die Kopplungsausnehmung 6 hineinragen. Hier werden dann die Verriegelungselemente 45 durch die Vorderseite 17 des Kopplungszapfens 12, dessen Abschlusskante zweckmäßigerweise abgerundet ist, nach radial außen verdrängt.

Befindet sich die Betätigungshülse 55 in der Offenstellung, können die Verriegelungselemente 45 prinzipiell ihre Arbeitsbewegung 48 ungehindert zwischen der Verriegelungsstellung und der Freigabestellung ausführen, und zwar unabhängig voneinander. Sie sind zweckmäßigerweise nicht in einer der beiden Stellungen fixiert.

Jede Paarung bestehend aus einer Aufnahmevertiefung 62 und einer Rampe 64 bildet einen Betätigungsabschnitt 66 der Betätigungsstruktur 58, wobei die Anzahl und die umfangsmäßige Verteilung der Betätigungsabschnitte 66 derjenigen der Verriegelungselemente 45 entspricht. Dementsprechend weist die Betätigungshülse 55 beim Ausführungsbeispiel insgesamt drei Betätigungsabschnitte 66 auf.

Die rotative Betätigungsbewegung 56 ist sowohl in der Schließrichtung 56a als auch in der Öffnungsrichtung 56b durch ein unter Druck stehendes Antriebsfluid hervorrufbar. Das Antriebsfluid ist vorzugsweise Druckluft.

Das Antriebsfluid kooperiert mit einer Mehrzahl von Antriebskolben 67 der Antriebseinrichtung 54, die durch gesteuerte Fluidbeaufschlagung jeweils zu einer durch einen Doppelpfeil angedeuteten, hin und her gehenden linearen Antriebsbewegung 68 antreibbar sind und die über ein Verzahnungsgetriebe derart antriebsmäßig mit der Betätigungshülse 55 gekoppelt sind, dass durch die lineare Antriebsbewegung 68 die rotative Betätigungsbewegung 56 hervorgerufen wird.

Exemplarisch verfügt die Antriebseinrichtung 54 über drei Antriebskolben 67. Hier ist allerdings auch eine andere Anzahl möglich und insbesondere kann auch nur ein einziger Antriebskolben 67 vorhanden sein.

Zu dem Verzahnungsgetriebe der Antriebseinrichtung 54 gehört ein an der Betätigungshülse 55 angeordneter Antriebszahnkranz 72. Der Antriebszahnkranz 72 ist nach Art eines Ritzels kreisbogenförmig gekrümmt, wobei sein Krümmungszentrum auf der Längsachse 7 liegt. Er ist zweckmäßigerweise ringförmig in sich geschlossen ausgebildet und koaxial zu der zentralen Längsachse 7 angeordnet. Bevorzugt befindet er sich an der von der Längsachse 7 radial abgewandten Außenumfangsfläche 73 der Betätigungshülse 55.

Zu dem Verzahnungsgetriebe gehören außerdem eine der Anzahl der Antriebskolben 67 entsprechende Anzahl von Zahnstangen 74. Jeder Antriebskolben 67 weist an seinem radialen Außenumfang eine solche Zahnstange 74 auf. Jede Zahnstange 74 hat eine lineare Längserstreckung mit quer zu der Längserstreckung verlaufenden Zähnen.

Die Antriebskolben 67 sind derart im Bereich des Außenumfanges der Betätigungshülse 55 in dem Grundkörper 25 angeordnet, dass die Verzahnungen ihrer Zahnstangen 74 mit der auf einer Kreislinie liegenden Verzahnung des Antriebszahnkranzes 72 kämmen. Exemplarisch sind die Antriebskolben 67 beweglich in dem Gehäuse 26 angeordnet.

Jeder Antriebskolben 67 ist in einem im Grundkörper 25 beziehungsweise exemplarisch in dem Gehäuse 26 ausgebildeten länglichen Arbeitsraum 75 aufgenommen. Der Antriebskolben 67 kann in dem zugeordneten Arbeitsraum 75 die Arbeitsbewegung 48 zwischen zwei Hubendlagen ausführen, die dadurch definiert sind, dass der Antriebskolben 67 auf eine von zwei stirnseitigen Abschlusswänden 76 des Arbeitsraumes 75 auftrifft. Die Abschlusswände 76 sind zweckmäßigerweise nach Art von Verschlussstopfen in Gehäusebohrungen des Gehäuses 26 eingesetzt, die tangential zu der Betätigungshülse 55 verlaufen und mit ihren beiden Stirnseiten jeweils zur radialen Außenumfangsfläche 77 des Gehäuses 26 ausmünden.

Die Arbeitsräume 75 und somit auch die darin angeordneten Antriebskolben 67 sind so angeordnet und ausgerichtet, dass die Arbeitsbewegung 48 in einer zu der zentralen Längsachse 7 rechtwinkeligen Antriebsebene 78 verläuft. Die Längsachsen der Antriebskolben 67 liegen zweckmäßigerweise in dieser Antriebsebene 78. Die Antriebsebene 78 ist so platziert, dass in ihr auch der Antriebszahnkranz 72 liegt. Somit liegen die Antriebskolben 67 und der Antriebszahnkranz 72 in der Achsrichtung der Längsachse 7 auf gleicher Höhe.

Die mehreren Antriebskolben 67 mit ihren Zahnstangen 74 und die sie aufnehmenden Arbeitsräume 75 sind in dem Grundkörper 25 beziehungsweise in dem Gehäuse 26 vorzugsweise in gleichmäßiger Verteilung rings um die Kopplungsausnehmung 6 angeordnet.

Jeder Arbeitsraum 75 erstreckt sich nach Art einer Tangente an der mittigen Gehäusebohrung 27 vorbei, wobei er allerdings so weit an die zentrale Längsachse 7 herangerückt ist, dass er die Gehäusebohrung 27 peripher anschneidet. Dadurch ergibt sich ein offenes Verbindungsfenster 82 zwischen jedem Arbeitsraum 75 und der Gehäusebohrung 27.

An jedem Antriebskolben 67 ist die Zahnstange 74 in einem Bereich des radialen Außenumfanges angeordnet. Außerdem ist der Antriebskolben 67 derart in den zugeordneten Arbeitsraum 75 eingesetzt, dass die Zahnstange 74 dem Antriebszahnkranz 72 zugewandt ist und das zugeordnete Verbindungsfenster 82 durchquert. Somit steht jede Zahnstange 74 durch ein Verbindungsfenster 82 hindurch mit dem Antriebszahnkranz 72 in Verzahnungseingriff.

Jeder Antriebskolben 67 bildet zusammen mit dem ihn aufnehmenden Arbeitsraum 75 und den den Arbeitsraum 75 begrenzenden Bestandteilen des Grundkörpers 25 einen doppeltwirkenden Arbeitszylinder 83. Hierzu weist jeder Antriebskolben 67 an seinen beiden axialen Endbereichen eine gleitverschieblich und abdichtend am Innenumfang des Arbeitsraumes 75 anliegende ringförmige Dichtung 84 auf. Aufgrund der beiden Dichtungen 84 unterteilt der Antriebskolben 67 den Arbeitsraum 75 axial in zwei Antriebskammern 85a, 85b. Jede Antriebskammer 85a, 85b ist auf der dem Antriebskolben 67 axial gegenüberliegenden Seite von einer der Abschlusswände 76 begrenzt.

Der axiale Abstand zwischen den beiden ringförmigen Dichtungen 84 ist so gewählt, dass das Verbindungsfenster 82 in jeder durch die Arbeitsbewegung 48 erzielbaren Arbeitsposition von beiden Antriebskammern 85a, 85b fluiddicht abgetrennt ist. Die Zahnstange 74 befindet sich in dem axialen Bereich zwischen den beiden Dichtungen 84.

Jede Antriebskammer 85a, 85b ist an das weiter oben schon angesprochene Fluidkanalsystem 43 angeschlossen. Jede Antriebskammer 85a, 85b ist über einen Verbindungskanal 86a, 86b in einer in Figur 10 gestrichelt angedeuteten Weise mit einem der beiden Ringkanäle 42a, 42b verbunden, die ihrerseits jeweils über einen von ihnen abzweigenden Fluidkanal mit einer von zwei Anschlussöffnungen 87a, 87b verbunden sind, die außen an dem Grundkörper 25 und insbesondere an dessen radialer Außenumfangsfläche 77 ausmünden.

Im Betrieb der Kopplungsvorrichtung 1 sind die beiden Anschlussöffnungen 87a, 87b an eine Steuerventileinrichtung angeschlossen, durch die eine gesteuerte Zufuhr und Abfuhr des Antriebsfluides bezüglich der beiden Antriebskammern 45a, 45b jedes Arbeitszylinders 83 durchführbar ist. Mit einer solchen gesteuerten Fluidbeaufschlagung können die Antriebskolben 67 synchron zu ihrer Antriebsbewegung 48 angetrieben werden. Abhängig von der Bewegungsrichtung der Arbeitsbewegung 48 wird die Betätigungshülse 55 entweder in der Schließrichtung 56a oder in der Öffnungsrichtung 56b verdreht. Somit kann die Betätigungshülse 55 durch die gesteuerte Fluidbeaufschlagung wahlweise in der Offenstellung oder in der Schließstellung rotativ positioniert werden, womit entweder die Freigabestellung oder die Verriegelungsstellung der Verriegelungselemente 45 einhergeht.

Die Kopplungsvorrichtung 1 ist optional mit einer Handbetätigungseinrichtung 88 ausgestattet, die ein manuelles Hervorrufen der rotativen Betätigungsbewegung 56 der Betätigungshülse 55 ermöglicht. Die illustrierte Kopplungsvorrichtung 1 weist eine solche Handbetätigungseinrichtung 88 auf.

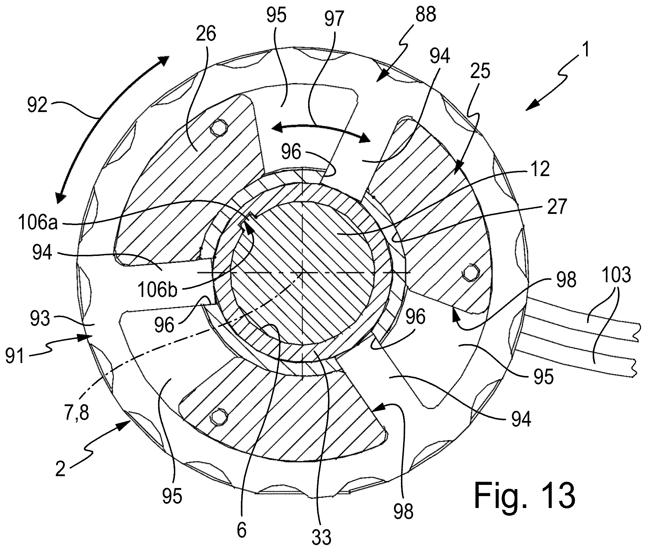

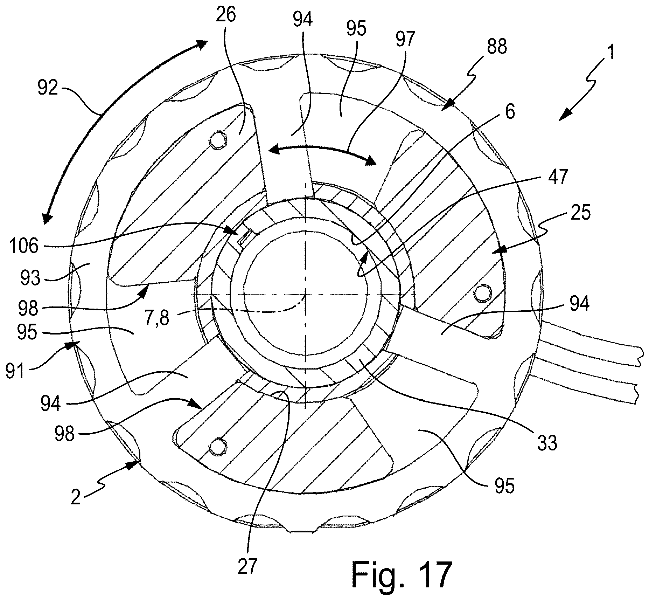

Die Handbetätigungseinrichtung 88 verfügt zweckmäßigerweise über einen an dem Grundkörper 25 um die zentrale Längsachse 7 verdrehbar gelagerten Handbetätigungsring 91. Der Handbetätigungsring 91 ist mit der Betätigungshülse 55 derart drehfest verbunden, dass eine in den Figuren 13 und 17 durch einen Doppelpfeil angedeutete Drehbewegung 92 des Handbetätigungsringes 91 direkt die rotative Betätigungsbewegung 56 hervorruft.

Die Handbetätigungseinrichtung 91 hat zweckmäßigerweise einen den Grundkörper 25 an seinem radialen Außenumfang koaxial umschließenden ringförmigen Betätigungsabschnitt 93. Er lässt sich mit einer Hand ergreifen und zur Ausführung der Drehbewegung 92 relativ zum Grundkörper 25 manuell verdrehen.

Von dem ringförmigen Betätigungsabschnitt 93 ragen, insbesondere speichenartig, mehrere Mitnehmerarme 94 radial nach innen in Richtung der zentralen Längsachse 7. Dabei durchgreift jeder Mitnehmerarm 94 eine insbesondere kreissegmentförmig gestaltete Gehäusedurchbrechung 95 des Gehäuses 26, die einerseits zu der radialen Außenumfangsfläche 77 und andererseits zu der Gehäusebohrung 27 ausmündet. Jeder Mitnehmerarm 94 ragt von radial außen her in die Gehäusebohrung 27 hinein, wo er formschlüssig in eine Mitnehmeraussparung 96 der Betätigungshülse 55 eingreift.

Die Mitnehmeraussparungen 96 sind beispielsweise als punktuell verteilte Vertiefungen in die der axialen Rückseite 14 zugewandte Stirnfläche der Betätigungshülse 55 eingebracht.

Bei der Drehbewegung 92 werden die Mitnehmerarme 94 gemäß Doppelpfeilen 97 um die Längsachse 7 verschwenkt, wobei sie aufgrund des Eingriffes in die Mitnehmeraussparungen 96 die Betätigungshülse 55 mitnehmen.

Jede Gehäusedurchbrechung 95 ist an ihren in der Umfangsrichtung der Längsachse 7 einander entgegengesetzten Seiten zweckmäßigerweise durch eine Anschlagfläche 98 des Gehäuses 26 begrenzt, durch die im Zusammenwirken mit dem zugeordneten Mitnehmerarm 94 der Drehwinkel des Handbetätigungsringes 91 begrenzt wird.

Bevorzugt sind die Anschlagflächen 98 so gestaltet, dass die eine davon die Offenstellung und die andere davon die Schließstellung der Betätigungshülse 55 definiert.

Die Gehäusedurchbrechungen 95 sind bevorzugt dadurch realisiert, dass in die der axialen Rückseite 14 zugewandte Stirnfläche des Gehäuses 26 segmentartige Vertiefungen 99 eingebracht sind, die durch die Abdeckplatte 35 überdeckt sind, sodass die Gehäusedurchbrechungen 95 jeweils schlitzartig gestaltet sind. Die Schlitzebenen sämtlicher Gehäusedurchbrechungen 95 fallen zusammen und verlaufen rechtwinkelig zu der Längsachse 7.

In die zweite Kopplungskomponente 3 integrierte Einrichtungen oder an die zweite Kopplungskomponente 3 angebaute Einrichtungen, beispielsweise ein Endeffektor, können ausgebildet sein, um unter Verwendung eines fluidischen Druckmediums oder elektrischen Stroms betrieben zu werden. Beispielsweise ist an die zweite Befestigungsschnittstelle 5 eine mittels eines Druckmediums, beispielsweise Druckluft, betreibbare Greifvorrichtung angebaut, die über Sensormittel verfügt, die elektrische Rückmeldesignale ausgeben können. Es ist daher vorteilhaft, wenn die Kopplungsvorrichtung 1 über elektrische und/oder fluidische Verbindungsmittel verfügt, durch die fluidisches Druckmedium und/oder elektrischer Strom zwischen den beiden Kopplungskomponenten 2, 3 übertragbar ist, wenn die zweite Kopplungskomponente 3 ihre verriegelte Gebrauchsstellung einnimmt. Die Kopplungsvorrichtung 1 des Ausführungsbeispiels verfügt über eine entsprechende Ausstattung, die in einer vorteilhaften Ausführungsform nachstehend beschrieben wird.

Die erste Kopplungskomponente 2 verfügt im Bereich ihrer axialen Vorderseite 13 über elektrische Verbindungselemente 101 und über fluidische Verbindungselemente 102, die nachfolgend gemeinsam als Verbindungselemente 101, 102 bezeichnet werden. Der verwendete Plural schließt die Verwendung jeweils einer Einzahl solcher Verbindungselemente 101, 102 ein. Die Verbindungselemente 101, 102 stehen mit Verbindungsleitungen 103 in Verbindung, durch die das Druckmedium und der elektrische Strom zwischen den Verbindungselementen 101, 102 und einer nicht weiter abgebildeten externen elektrofluidischen Steuereinrichtung übertragbar sind. Die Verbindungsleitungen 103 sind beispielsweise in oder an einem Bestandteil eines die erste Kopplungskomponente 2 tragenden Handhabungsgerätes verlegt. Sie sind insbesondere flexibel biegbar und bestehen beispielsweise aus elektrischen Kabeln und/oder aus Fluidschläuchen.

Die zweite Kopplungskomponente 3 ist im Bereich der in der Gebrauchsstellung der axialen Vorderseite 13 der ersten Kopplungskomponente 2 zugewandten vorderen Stirnfläche 18 ihres Flanschabschnittes 16 mit elektrischen Gegen-Verbindungselementen 104 und mit fluidischen Gegen-Verbindungselementen 105 ausgestattet, die im Folgenden gemeinsam als Gegen-Verbindungselemente 104, 105 bezeichnet werden. In der verriegelten Gebrauchsstellung der zweiten Kopplungskomponente 3 sind die Verbindungselemente 101, 102 und die Gegen-Verbindungselemente 104, 105 paarweise so miteinander verbunden, dass zwischen ihnen fluidisches Druckmedium und elektrischer Strom übertragbar sind.

Die Gegen-Verbindungselemente 104, 105 sind ausgebildet, um mit fluidtechnischen und/oder elektrischen Komponenten des an der zweiten Befestigungsschnittstelle 5 montierten Endeffektors verbunden werden zu können. Beispielsweise sind sie mit nicht dargestellten weiterführenden Fluidkanälen oder elektrischen Leitern der zweiten Kopplungskomponente 3 verbunden, an denen Schnittstellen zur Verbindung mit den fluidtechnischen und/oder elektrischen Komponenten angeordnet sind.

Die beiden Kopplungskomponenten 2, 3 enthalten in alternativen Ausführungsformen entweder nur elektrische Verbindungselemente 101 und elektrische Gegen-Verbindungselemente 104 oder nur fluidische Verbindungselemente 102 und fluidische Gegen-Verbindungselemente 105.

Die an der ersten Kopplungskomponente 2 angeordneten Verbindungselemente 101, 102 sind bevorzugt zapfenförmig oder stiftförmig ausgebildet, sodass sie von der Vorderseite 17 in der Achsrichtung der Längsachse 7 abstehen können. Die Gegen-Verbindungselemente 104, 105 sind insbesondere als Vertiefungen ausgebildet, in die die Verbindungselemente 101, 102 zur Herstellung der gewünschten Verbindung durch axiales Einstecken eingreifen können.

Die Verbindungselemente 101, 102 sind so im Bereich der axialen Vorderseite 13 der ersten Kopplungskomponente 2 angeordnet, dass sie der ringförmigen vorderen Stirnfläche 18 des Flanschabschnittes 16 der zweiten Kopplungskomponente 3 gegenüberliegen, wobei die Gegen-Verbindungselemente 104, 105 an dem Flanschabschnitt 16 im Bereich der ringförmigen vorderen Stirnfläche 18 angeordnet sind. Die zweite Kopplungskomponente 3 ist derart in die Gebrauchsstellung verbringbar, dass sich die Verbindungselemente 101, 102 und die Gegen-Verbindungselemente 104, 105 in der Achsrichtung der Längsachse 7 jeweils paarweise gegenüberliegen. Um zuordnungsrichtige Paarungen zu gewährleisten, sind die beiden Kopplungskomponenten 2, 3 mit einer Positionsvorgabeeinrichtung 106 ausgestattet, die nur in einer ganz bestimmten Drehwinkellage ein Einstecken der zweiten Kopplungskomponente 3 in die Kopplungsausnehmung 6 ermöglicht. Exemplarisch umfasst die Positionsvorgabeeinrichtung 106 einen von dem Kopplungszapfen 12 radial abstehenden Positioniervorsprung 106a und eine in der radialen Begrenzungsfläche 47 der Kopplungsausnehmung 6 ausgebildete, sich in Achsrichtung der Längsachse 7 erstreckende Positioniernut 106b.

In vorteilhafter Weise sind die Verbindungselemente 101, 102 vor Beschädigung geschützt, solange die zweite Kopplungskomponente 3 nicht mit der ersten Kopplungskomponente 2 verbunden ist.

Bevorzugt ist dies dadurch realisiert, dass die Verbindungselemente 101, 102 an einem ringförmigen Verbindungselementeträger 107 fest angebracht sind, der an dem Grundkörper 25 koaxial zu der zentralen Längsachse 7 angeordnet ist und der unter Ausführung einer durch einen Doppelpfeil angedeuteten Hubbewegung 108 in der Achsrichtung der Längsachse 7 relativ zu dem Grundkörper 25 verschiebbar ist.

Der ringförmige Verbindungselementeträger 107 sitzt exemplarisch in der mittigen Gehäusebohrung 27 des Gehäuses 26, wobei er in einem zwischen der Betätigungshülse 55 und dem ringförmigen Gehäuse 26 ausgebildeten Ringraum 109 aufgenommen ist. Der Verbindungselementeträger 107 umschließt die Betätigungshülse 55 im Bereich ihres Außenumfanges in koaxialer Anordnung.

Eine zwischen dem Verbindungselementeträger 107 und dem Grundkörper 25 wirksame Verdrehsicherungseinrichtung 110 sorgt dafür, dass die Drehwinkellage des Verbindungselementeträgers 107 bezüglich des Grundkörpers 25 unveränderlich ist. Gleichzeitig erlaubt die Verdrehsicherungseinrichtung 110 die Hubbewegung 108. Exemplarisch umfasst die Verdrehsicherungseinrichtung 110 mehrere am radialen Außenumfang des Verbindungselementeträgers 107 ausgebildete Verdrehsicherungsnuten, die sich in der Achsrichtung der Längsachse 7 erstrecken und in die jeweils ein Verdrehsicherungsvorsprung der Verdrehsicherungseinrichtung 110 eingreift, der an der Innenumfangsfläche der mittigen Gehäusebohrung 27 ausgebildet ist und radial in die Gehäusebohrung 27 hineinragt.

Die Verbindungselemente 101, 102 sind an der dem Flanschabschnitt 16 der die Gebrauchsstellung einnehmenden zweiten Kopplungskomponente 3 zugewandten vorderen Stirnseite 111 des Verbindungselementeträgers 107 angeordnet, von der sie nach vorne in Richtung zu dem Flanschabschnitt 16 wegragen.

Die Verbindungselemente 104, 105 sind rings um die Längsachse 7 verteilt an der vorderen Stirnseite 111 des Verbindungselementeträgers 107 angeordnet. Vorzugsweise handelt es sich um eine gleichmäßige Verteilung. Die Anzahl der elektrischen Verbindungselemente 101 und/oder fluidischen Verbindungselemente 102 ist frei wählbar und insbesondere abhängig von der jeweiligen Anwendung.

Der den Verbindungselementeträger 107 aufnehmende Ringraum 109 ist im Bereich der axialen Vorderseite 13 der ersten Kopplungskomponente 2 durch eine Wand des Grundkörpers 25 verschlossen, die exemplarisch von dem Flanschabschnitt 32 der Flanschhülse 28 gebildet ist. Diese Wand, vorliegend also der Flanschabschnitt 32, ist von einer Mehrzahl von Durchtrittsöffnungen 112 axial durchsetzt, deren Verteilung derjenigen der Verbindungselemente 101, 102 entspricht, sodass jedes Verbindungselement 101, 102 mit einer der Durchtrittsöffnungen 112 axial fluchtet.

Im Rahmen der Hubbewegung 108 kann der Verbindungselementeträger 107 alternativ in einer aus Figur 15 ersichtlichen Grundstellung oder in einer aus Figur 10 ersichtlichen Verbindungsstellung positioniert werden. Die axiale Länge des Verbindungselementeträgers 107 ist geringer als diejenige des Ringraumes 109, wobei der Verbindungselementeträger 107 in der Grundstellung axial tiefer in dem Ringraum 109 positioniert ist als in der Verbindungsstellung. Vorzugsweise liegt er in der Verbindungsstellung an der ihm zugewandten axialen Stirnfläche des Flanschabschnittes 32 an.

Die Verbindungselemente 101, 102 sind in der Grundstellung des Verbindungselementeträgers 107 in den Grundkörper 25 axial eingefahren. Beim Ausführungsbeispiel bedeutet dies, dass sie nicht über die an der axialen Vorderseite 13 befindliche vordere Stirnfläche 32a des Flanschabschnittes 32 hinausragen. Dadurch sind sie vor Beschädigung geschützt, wenn die zweite Kopplungskomponente 3 die nicht installierte Bereitschaftsstellung einnimmt.

Da die Verbindungselemente 101, 102 die Hubbewegung 108 unmittelbar mitmachen, sind sie in der Verbindungsstellung des Verbindungselementeträgers 107 durch die Durchtrittsöffnungen 112 hindurch axial aus dem Grundkörper 25 ausgefahren. In dieser ausgefahrenen Stellung können sie in die Gegen-Verbindungselemente 104, 105 der die Gebrauchsstellung einnehmenden zweiten Kopplungskomponente 3 eingreifen. Die von den Verbindungselementen 101, 102 bei der Hubbewegung 108 ausgeführte Linearbewegung zwischen der eingefahrenen Stellung und der ausgefahrenen Stellung ist bei 113 durch einen Doppelpfeil angedeutet.

Eine Besonderheit der elektrischen und/oder fluidischen Verbindungsmaßnahmen besteht darin, dass der Verbindungselementeträger 107 derart antriebsmäßig mit der Betätigungshülse 55 gekoppelt ist, dass die axiale Hubbewegung 108 des Verbindungselementeträgers 107 mechanisch von der rotativen Betätigungsbewegung 56 der Betätigungshülse 55 abgeleitet wird. Diese antriebsmäßige Kopplung ist insbesondere so ausgeführt, dass der Verbindungselementeträger 107 in der Offenstellung der Betätigungshülse 55 die Grundstellung einnimmt und in der Schließstellung der Betätigungshülse 55 die Verbindungsstellung einnimmt.

Für die antriebsmäßige Kopplung ist an der Betätigungshülse 55 mindestens ein wendelförmiger erster Kopplungsabschnitt 114 ausgebildet. Er befindet sich vorzugsweise an der Außenumfangsfläche 73 der Betätigungshülse 55, wobei er dem Antriebszahnkranz 72 in Richtung zur Vorderseite 13 vorgelagert ist. Exemplarisch sind mehrere solcher wendelförmiger erster Kopplungsabschnitte 114 um die Betätigungshülse 55 herum verteilt angeordnet, wobei die Steigungen dieser mehreren ersten Kopplungsabschnitte 114 identisch sind. Die erste Kopplungsabschnitte 114 machen die rotative Betätigungsbewegung 56 der Betätigungshülse 55 mit.

Der ringförmige Verbindungselementeträger 107 verfügt über eine der Anzahl der ersten Kopplungsabschnitte 114 entsprechende Anzahl wendelförmiger zweiter Kopplungsabschnitte 115. Sie befinden sich vorzugsweise an der radialen Innenumfangsfläche 116 des Verbindungselementeträgers 107.

Die ersten und zweiten Kopplungsabschnitte 114, 115 sind komplementär zueinander gestaltet. Exemplarisch sind die ersten Kopplungsabschnitte 114 nutförmig ausgebildet, während die zweiten Kopplungsabschnitte 115 rippenförmig ausgebildet sind. Diese Anordnung kann auch vertauscht sein.

Die ersten und zweiten Kopplungsabschnitte 114, 115 greifen nach Art einer Schraubverbindung ineinander. Die ersten Kopplungsabschnitte 114 definieren ein Außengewinde, die zweiten Kopplungsabschnitte 115 ein Innengewinde. Es handelt sich vorzugsweise jeweils um ein mehrgängiges Gewinde.

Bei der rotativen Betätigungsbewegung 56 der Betätigungshülse 55 laufen die ersten Kopplungsabschnitte 114 entlang der zweiten Kopplungsabschnitte 115, was aufgrund der bezüglich des Grundkörpers 25 verdrehgesicherten Anordnung des Verbindungselementeträgers 107 zur Folge hat, dass der Verbindungselementeträger 107 zu der axialen Hubbewegung 108 angetrieben wird, mit der die Linearbewegung 113 der Verbindungselemente 101, 102 einhergeht.

## Patentansprüche

1. Kopplungsvorrichtung, mit einer ersten Kopplungskomponente (2), in der eine eine zentrale Längsachse (7) aufweisende Kopplungsausnehmung (6) ausgebildet ist, in die eine zweite Kopplungskomponente (3) unter Einnahme einer Gebrauchsstellung mit einem Kopplungszapfen (12) axial einsteckbar ist, wobei die zweite Kopplungskomponente (3) durch Verriegelungselemente (45), die eine bezüglich der zentralen Längsachse (7) radiale Arbeitsbewegung (48) ausführen können, in ihrer Gebrauchsstellung bezüglich der ersten Kopplungskomponente (2) axial unbeweglich lösbar verriegelbar ist, und mit einer Antriebseinrichtung (54) zur fluidbetätigten Steuerung der radialen Arbeitsbewegung (48) der Verriegelungselemente (45),
wobei
- die erste Kopplungskomponente (2) einen die Kopplungsausnehmung (6) umschließenden Grundkörper (25) aufweist, in dem mehrere um die Kopplungsausnehmung (6) herum verteilte Verriegelungselemente (45) aufgenommen sind, die jeweils im Rahmen einer radialen Arbeitsbewegung (48) zwischen einer radial in die Kopplungsausnehmung (6) hineinragenden und dabei mit einer Verriegelungsausnehmung (23) des Kopplungszapfens (12) der die Gebrauchsstellung einnehmenden zweiten Kopplungskomponente (3) in Verriegelungseingriff stehenden Verriegelungsstellung und einer im Vergleich zu der Verriegelungsstellung radial nach außen verlagerten, das Herausziehen der zweiten Kopplungskomponente (3) aus der Kopplungsausnehmung (6) ermöglichenden Freigabestellung bewegbar sind,
- und wobei die Antriebseinrichtung (54) eine zu der Kopplungsausnehmung (6) koaxiale, die Verriegelungselemente (45) umschließende Betätigungshülse (55) aufweist, die unter Ausführung einer rotativen Betätigungsbewegung (56) relativ zu dem Grundkörper (26) um die Längsachse (7) der Kopplungsausnehmung (6) hin und her verdrehbar ist und die an ihrer Innenumfangsfläche (57) eine mit den Verriegelungselementen (45) zusammenwirkende Betätigungsstruktur (58) aufweist, **dadurch gekennzeichnet, dass**
- die Betätigungshülse (55) außerdem einen Antriebszahnkranz (72) aufweist, mit dem eine Zahnstange (74) mindestens eines in dem Grundkörper (25) linear verschiebbar gelagerten Antriebskolbens (67) der Antriebseinrichtung (54) in Verzahnungseingriff steht,
- wobei durch gesteuerte Fluidbeaufschlagung mittels eines in der ersten Kopplungskomponente (2) ausgebildeten Fluidkanalsystems (43) eine hin und her gehende lineare Antriebsbewegung (68) des mindestens einen Antriebskolbens (67) hervorrufbar ist, aus der aufgrund des Verzahnungseingriffes die rotative Betätigungsbewegung (56) der Betätigungshülse (55) resultiert,
- und wobei die Betätigungsstruktur (58) der Betätigungshülse (55) so gestaltet ist, dass sie abhängig von der Drehposition der Betätigungshülse (55) entweder eine die Verriegelungselemente (45) in die Verriegelungsstellung drückende Schubkraft erzeugt oder ein Zurückweichen der Verriegelungselemente (45) aus der Verriegelungsstellung in die Freigabestellung gestattet.

2. Kopplungsvorrichtung nach Anspruch 1, **dadurch gekennzeichnet, dass** die zweite Kopplungskomponente (3) ein Bestandteil der Kopplungsvorrichtung (1) ist und zweckmäßigerweise einen den Kopplungszapfen (12) radial überragenden Flanschabschnitt (16) aufweist, der in der eingesteckten Gebrauchsstellung einer axialen Vorderseite (13) der ersten Kopplungskomponente (2) vorgelagert ist und an einer vorderen Stirnfläche des Grundkörpers (25) anliegt.

3. Kopplungsvorrichtung nach Anspruch 1 oder 2, **dadurch gekennzeichnet, dass** der mindestens eine Antriebskolben (67) so ausgerichtet ist, dass seine Antriebsbewegung (68) in einer zu der zentralen Längsachse (7) rechtwinkeligen Antriebsebene (78) verläuft.

4. Kopplungsvorrichtung nach einem der Ansprüche 1 bis 3, **dadurch gekennzeichnet, dass** die Antriebseinrichtung (54) mehrere und insbesondere drei Antriebskolben (67) aufweist, die in dem Grundkörper (25) rings um die Kopplungsausnehmung (6) herum verteilt angeordnet sind.

5. Kopplungsvorrichtung nach einem der Ansprüche 1 bis 4, **dadurch gekennzeichnet, dass** jeder Antriebskolben (67) Bestandteil eines doppeltwirkenden Arbeitszylinders (83) ist, der einen in dem Grundkörper (26) ausgebildeten Arbeitsraum (75) aufweist, in dem der Antriebskolben(67) linear verschiebbar aufgenommen ist und der von dem Antriebskolben (67) axial in zwei Antriebskammern (85a, 85b) unterteilt ist, die jeweils zur wahlweisen Zufuhr oder Abfuhr eines Antriebsfluides mit dem Fluidkanalsystem (43) verbunden sind.

6. Kopplungsvorrichtung nach Anspruch 5, **dadurch gekennzeichnet, dass** das Fluidkanalsystem (43) zwei koaxial zu der Kopplungsausnehmung (6) in dem Grundkörper (25) ausgebildete Ringkanäle (42a, 42b) aufweist, die jeweils mit einer der beiden Antriebskammern (85a, 85b) eines jeweiligen Arbeitszylinders (83) verbunden sind und die außerdem jeweils mit einer an einer Außenfläche (77) des Grundkörpers (25) ausmündenden, eine Zufuhr und Abfuhr des Antriebsfluides ermöglichenden Anschlussöffnung (87a, 87b) verbunden sind.

7. Kopplungsvorrichtung nach einem der Ansprüche 1 bis 6, **dadurch gekennzeichnet, dass** der Antriebszahnkranz (72) ringförmig in sich geschlossen ausgebildet und an der radialen Außenumfangsfläche (73) der Betätigungshülse (55) in diesbezüglich koaxialer Ausrichtung angeordnet ist.

8. Kopplungsvorrichtung nach einem der Ansprüche 1 bis 7, **dadurch gekennzeichnet, dass** die Betätigungsstruktur (58) zumindest eine der Anzahl der Antriebskolben (67) entsprechende Anzahl von Betätigungsabschnitten (66) aufweist, die jeweils eine zur Kopplungsausnehmung (6) hin offene Aufnahmevertiefung (62) und eine sich in der Umfangsrichtung der Betätigungshülse (55) an die Aufnahmevertiefung (62) anschließende Rampe (64) mit einer sich mit zunehmender Entfernung von der Aufnahmevertiefung (62) an die zentrale Längsachse (7) der Kopplungsausnehmung (6) annähernden gekrümmten Rampenfläche (63) hat, wobei das zugeordnete Verriegelungselement (45) in der Freigabestellung in die Aufnahmevertiefung (62) eintauchen kann oder eintaucht und in der Verriegelungsstellung an der Rampenfläche (63) anliegt.

9. Kopplungsvorrichtung nach einem der Ansprüche 1 bis 8, **dadurch gekennzeichnet, dass** sie eine Handbetätigungseinrichtung (88) zum manuellen Hervorrufen der rotativen Betätigungsbewegung (56) der Betätigungshülse (55) aufweist, die einen an dem Grundkörper (25) bezüglich der zentralen Längsachse (7) der Kopplungsausnehmung (6) drehbar gelagerten Handbetätigungsring (91) aufweist, der mit der Betätigungshülse (55) drehfest verbunden ist.

10. Kopplungsvorrichtung nach Anspruch 9, **dadurch gekennzeichnet, dass** der Handbetätigungsring (91) einen den Grundkörper (25) koaxial umschließenden ringförmigen Betätigungsabschnitt (93) und einen oder mehrere ausgehend von diesem Betätigungsabschnitt (93) radial nach innen ragende Mitnehmerarme (94) aufweist, die jeweils in eine Mitnehmeraussparung (96) der Betätigungshülse (55) eingreifen.

11. Kopplungsvorrichtung nach einem der Ansprüche 1 bis 10, **dadurch gekennzeichnet, dass** die Verriegelungselemente (45) kugelförmig ausgebildet und jeweils in einem bezüglich der zentralen Längsachse (7) radial orientierten Führungskanal (46) des Grundkörpers (25) zur Ausführung der Arbeitsbewegung (48) gelagert sind.

12. Kopplungsvorrichtung nach einem der Ansprüche 1 bis 11, **dadurch gekennzeichnet, dass** die erste Kopplungskomponente (2) im Bereich einer axialen Vorderseite (13) über elektrische und/oder fluidische Verbindungselemente (101, 102) verfügt, die mit Gegen-Verbindungselementen (104, 105) der durch die Verriegelungselemente (45) in der eingesteckten Gebrauchsstellung verriegelten zweiten Kopplungskomponente (3) verbunden sind.

13. Kopplungsvorrichtung nach einem der Ansprüche 1 bis 12, **dadurch gekennzeichnet, dass** die elektrischen und/oder fluidischen Verbindungselemente (101, 102) an einem zu der Kopplungsausnehmung (6) koaxialen ringförmigen Verbindungselementeträger (107) angeordnet sind, der bezüglich des Grundkörpers (25) unter Ausführung einer axialen Hubbewegung (108) zwischen einer Grundstellung, in der die elektrischen und/oder fluidischen Verbindungselemente (101, 102) in den Grundkörper (25) eingefahren sind, und einer Verbindungsstellung, in der die elektrischen und/oder fluidischen Verbindungselemente (101, 102) aus dem Grundkörper (25) axial ausgefahren sind, bewegbar ist, wobei der Verbindungselementeträger (107) derart antriebsmäßig mit der Betätigungshülse (55) gekoppelt ist, dass die axiale Hubbewegung (108) des Verbindungselementeträgers (107) aus der rotativen Betätigungsbewegung (56) der Betätigungshülse (55) abgeleitet wird.

14. Kopplungsvorrichtung nach Anspruch 13, **dadurch gekennzeichnet, dass** an der Betätigungshülse (55) mindestens ein wendelförmiger erster Kopplungsabschnitt (114) ausgebildet ist, mit dem mindestens ein an dem Verbindungselementeträger (107) ausgebildeter wendelförmiger zweiter Kopplungsabschnitt (115) in Eingriff steht, wobei der Verbindungselementeträger (107) bezüglich des Grundkörpers (25) verdrehgesichert ist, sodass die rotative Betätigungsbewegung (56) einen die axiale Hubbewegung (108) erzeugenden Schraubvorgang auslöst.

15. Kopplungsvorrichtung nach einem der Ansprüche 1 bis 14, **dadurch gekennzeichnet, dass** der Grundkörper (25) der ersten Kopplungskomponente (2) ein ringförmiges Gehäuse (26) und eine koaxial in das Gehäuse (26) eingesetzte Flanschhülse (28) aufweist, wobei die Flanschhülse (28) einen dem Gehäuse (26) axial vorgelagerten und an dem Gehäuse (26) befestigten Flanschabschnitt (32) sowie einen in das Gehäuse (26) eintauchenden Hülsenabschnitt (33) aufweist, wobei die Betätigungshülse (55) koaxial und drehbar zwischen dem Gehäuse (26) und dem Hülsenabschnitt (33) der Flanschhülse (28) angeordnet ist, wobei der Hülsenabschnitt (33) radial von Führungskanälen (46) für die Verriegelungselemente (45) durchsetzt ist.

## Claims

1. Coupling device with a first coupling component (2), in which a coupling recess (6) having a central longitudinal axis (7) is formed, into which coupling recess (6) a second coupling component (3) can be inserted axially with a coupling pin (12) while adopting a position of use, wherein the second coupling component (3) can be locked in an axially immovable and releasable manner with respect to the first coupling component (2) in its position of use by locking elements (45) capable of performing a radial working movement (48) with respect to the central longitudinal axis (7), and with a drive device (54) for the fluid-actuated control of the radial working movement (48) of the locking elements (45), wherein the first coupling component (2) has a base body (25) surrounding the coupling recess (6), in which base body (25) there are accommodated several locking elements (45) distributed around the coupling recess (6), each of which is movable, within a radial working movement (48), between a locking position radially projecting into the coupling recess (6) while being in locking engagement with a locking recess (23) of the coupling pin (12) of the second coupling component (3) adopting the position of use and a release position displaced radially outwards compared to the locking position and enabling the second coupling component (3) to be pulled out of the coupling recess (6), wherein the drive device (54) has an actuating sleeve (55), which is coaxial with the coupling recess (6), surrounds the locking elements (45) and can be twisted to and from about the longitudinal axis (7) of the coupling recess (6) relative to the base body (26) while performing a rotative actuating movement (56), and which has an actuating structure (58) interacting with the locking elements (45) at its inner circumferential surface (57), **characterised in that**
- the actuating sleeve (55) furthermore has a drive sprocket (72), with which a rack (74) of at least one drive piston (67) - mounted for linear displacement - of the drive device (54) is in toothed engagement,
- wherein, by controlled fluid application by means of a fluid passage system (43) formed in the first coupling component (2), a reciprocating linear drive movement (68) of the at least one drive piston (67) can be induced, from which results the rotative actuating movement (56) of the actuating sleeve (55) by virtue of the toothed engagement,
- and wherein the actuating structure (58) of the actuating sleeve (55) is designed in such a way that, depending on the rotary position of the actuating sleeve (55), it either generates a thrust pushing the locking elements (45) into the locking position or permits a retreat of the locking elements (45) from the locking position into the release position.

2. Coupling device according to claim 1, **characterised in that** the second coupling component (3) is a part of the coupling device (1) and expediently has a flange section (16), which radially extends beyond the coupling pin (12) and is located in front of an axial front side (13) of the first coupling component (2) in the inserted position of use and bears against a front end face of the base body (25).

3. Coupling device according to claim 1 or 2, **characterised in that** the at least one drive piston (67) is oriented in such a way that its drive movement (68) runs in a drive plane (78) perpendicular to the central longitudinal axis (7).

4. Coupling device according to any of claims 1 to 3, **characterised in that** the drive device (43) has several and in particular three drive pistons (67), which are distributed in the base body (25) around the coupling recess (6).

5. Coupling device according to any of claims 1 to 4, **characterised in that** each drive piston (67) is a part of a double-acting working cylinder (83) having a working chamber (75) formed in the base body (25), in which the drive piston (67) is accommodated in a linearly displaceable manner and which is axially divided into two drive chambers (85a, 85b) by the drive piston (67), each of which drive chambers (85a, 85b) is connected to the fluid passage system (43) for optionally supplying or discharging a drive fluid.

6. Coupling device according to claim 5, **characterised in that** the fluid passage system (43) has two annular passages (42a, 42b) formed coaxially with the coupling recess (6) in the base body (25), each of which is connected to one of the two drive chambers (85a, 85b) of a respective working cylinder (83) and each of which is additionally connected to a connecting opening (87a, 87b) terminating at an outer surface (77) of the base body (25) and enabling the drive fluid to be supplied and discharged.

7. Coupling device according to any of claims 1 to 6, **characterised in that** the drive sprocket (72) is designed annular and self-contained and is located at the outer circumferential surface (73) of the actuating sleeve (55) while being oriented coaxially therewith.

8. Coupling device according to any of claims 1 to 7, **characterised in that** the actuating structure (58) has a number of actuating sections (66) which at least corresponds to the number of drive pistons (67), each of which actuating sections (66) has an accommodation recess (62) open towards the coupling recess (6) and a ramp (64) adjoining the accommodation recess (62) in the circumferential direction of the actuating sleeve (55) with a curved ramp surface (63) approaching the central longitudinal axis (7) of the coupling recess (6) as the distance from the accommodation recess (62) increases, wherein the associated locking element (45) can or does dip into the accommodation recess (62) in the release position and bears against the ramp surface (63) in the locking position.

9. Coupling device according to any of claims 1 to 8, **characterised in that** it has a manual actuating device (88) for manually inducing the rotative actuating movement (56) of the actuating sleeve (55), which manual actuating device (88) has a manual actuating ring (91), which is mounted at the base body (25) for rotation with respect to the central longitudinal axis (7) of the coupling recess (6) and is non-rotatably joined to the actuating sleeve (55).

10. Coupling device according to claim 9, **characterised in that** the manual actuating ring (91) has an annular actuating section (93) coaxially surrounding the base body (25) and one or more driver arms (94) extending radially inwards from said actuating section (93), each of which engages with a driver recess (96) of the actuating sleeve (55).

11. Coupling device according to any of claims 1 to 10, **characterised in that** the locking elements (45) are spherical in design and each of them is mounted in a guide channel (46) - oriented radially with respect to the central longitudinal axis (7) - of the base body (25) for performing the working movement (48).

12. Coupling device according to any of claims 1 to 11, **characterised in that** the first coupling component (2) has in the region of an axial front side (13) electric and/or fluidic connecting elements (101, 102), which are connected to mating connecting elements (104, 105) of the second coupling component (3) locked by the locking elements (45) in the inserted position of use.

13. Coupling device according to any of claims 1 to 12, **characterised in that** the electric and/or fluidic connecting elements (101, 102) are located at an annular connecting element carrier (107), which is coaxial with the coupling recess (6) and is movable with respect to the base body (25), while performing an axial stroking movement (108), between a basic position in which the electric and/or fluidic connecting elements (101, 102) are retracted into the base body (25) and a connecting position in which the electric and/or fluidic connecting elements (101, 102) are axially moved out of the base body (25), wherein the connecting element carrier (107) is drive-coupled to the actuating sleeve (55) in such a way that the axial stroking movement (108) of the connecting element carrier (107) is derived from the rotative actuating movement (56) of the actuating sleeve (55).

14. Coupling device according to claim 13, **characterised in that** at least one helical first coupling section (114) is formed at the actuating sleeve (55), with which helical first coupling section (114) at least one helical second coupling section (115) formed at the connecting element carrier (107) is in engagement, wherein the connecting element carrier (107) is secured against rotation with respect to the base body (25), so that the rotative actuating movement (56) triggers a screwing process which generates the axial stroking movement (108).

15. Coupling device according to any of claims 1 to 14, **characterised in that** the base body (25) of the first coupling component (2) has an annular housing (26) and a flanged sleeve (28) coaxially installed into the housing (26), wherein the flanged sleeve (28) has a flange section (32) placed axially in front of the housing (26) and secured to the housing (26) and a sleeve section (33) dipping into the housing (26), wherein the actuating sleeve (55) is arranged coaxially and rotatably between the housing (26) and the sleeve section (33) of the flanged sleeve (28), wherein the sleeve section (33) is radially passed through by guide channels (46) for the locking elements (45),

## Revendications

1. Dispositif d'accouplement, avec un premier composant d'accouplement (2), dans lequel un évidement d'accouplement (6) présentant un axe longitudinal central (7) est réalisé, dans lequel un second composant d'accouplement (3) peut être enfiché axialement en occupant une position d'utilisation avec un tenon d'accouplement (12), dans lequel le second composant d'accouplement (3) peut être verrouillé de manière amovible et immobile axialement dans sa position d'utilisation par rapport au premier composant d'accouplement (2) par des éléments de verrouillage (45) qui peuvent réaliser un mouvement de travail (48) radial par rapport à l'axe longitudinal central (7), et avec un dispositif d'entraînement (54) pour la commande actionnée par fluide du mouvement de travail (48) radial des éléments de verrouillage (45),
dans lequel
- le premier composant d'accouplement (2) présente un corps de base (25) entourant l'évidement d'accouplement (6), dans lequel plusieurs éléments de verrouillage (45) répartis autour de l'évidement d'accouplement (6) sont reçus, lesquels sont mobiles respectivement dans le cadre d'un mouvement de travail (48) radial entre une position de verrouillage se trouvant en prise de verrouillage avec un évidement de verrouillage (23) du tenon d'accouplement (12) du second composant d'accouplement (3) occupant la position d'utilisation et pénétrant radialement dans l'évidement d'accouplement (6) et une position de libération permettant le retrait du second composant d'accouplement (3) hors de l'évidement d'accouplement (6), déplacée radialement vers l'extérieur par rapport à la position de verrouillage,
- et dans lequel le dispositif d'entraînement (54) présente une douille d'actionnement (55) entourant les éléments de verrouillage (45), coaxiale à l'évidement d'accouplement (6), laquelle est rotative alternativement en réalisant un mouvement d'actionnement (56) rotatif par rapport au corps de base (26) autour de l'axe longitudinal (7) de l'évidement d'accouplement (6) et qui présente sur sa surface périphérique intérieure (57) une structure d'actionnement (58) coagissant avec les éléments de verrouillage (45), **caractérisé en ce que**
- la douille d'actionnement (55) présente de plus une couronne dentée d'entraînement (72), avec laquelle une crémaillère (74) au moins d'un piston d'entraînement (67) logé de manière linéairement mobile dans le corps de base (25) du dispositif d'entraînement (54) est en prise de denture,
- dans lequel un mouvement d'entraînement (68) linéaire venant alternativement d'au moins un piston d'entraînement (67) peut être suscité par l'alimentation en fluide commandée au moyen d'un système de canal de fluide (43) réalisé dans le premier composant d'accouplement (2), duquel il résulte le mouvement d'actionnement (56) rotatif de la douille d'actionnement (55) en raison de la prise de denture,
- et dans lequel la structure d'actionnement (58) de la douille d'actionnement (55) est conçue de sorte qu'elle génère en fonction de la position de rotation de la douille d'actionnement (55), une force de poussée pressant les éléments de verrouillage (45) dans la position de verrouillage ou autorise un recul des éléments de verrouillage (45) hors de la position de verrouillage dans la position de libération.

2. Dispositif d'accouplement selon la revendication 1, **caractérisé en ce que** le second composant d'accouplement (3) est un constituant du dispositif d'accouplement (1) et présente de manière appropriée une section de bride (16) dépassant radialement du tenon d'accouplement (12) qui est logée dans la position d'utilisation enfichée en amont d'un côté avant (13) axial du premier composant d'accouplement (2) et repose contre une surface frontale avant du corps de base (25).

3. Dispositif d'accouplement selon la revendication 1 ou 2, **caractérisé en ce que** l'au moins un piston d'entraînement (67) est orienté de sorte que son mouvement d'entraînement (68) s'étende dans un plan d'entraînement (78) à angle droit par rapport à l'axe longitudinal central (7).

4. Dispositif d'accouplement selon l'une quelconque des revendications 1 à 3, **caractérisé en ce que** le dispositif d'entraînement (54) présente plusieurs et en particulier trois pistons d'entraînement (67) qui sont agencés répartis dans le corps de base (25) tout autour de l'évidement d'accouplement (6).

5. Dispositif d'accouplement selon l'une quelconque des revendications 1 à 4, **caractérisé en ce que** chaque piston d'entraînement (67) est constitué d'un vérin de travail à double action (83) qui présente un espace de travail (75) réalisé dans le corps de base (26), dans lequel le piston d'entraînement (67) est reçu de manière mobile linéairement et qui est divisé par le piston d'entraînement (67) axialement en deux chambres d'entraînement (85a, 85b) qui sont reliées respectivement au choix pour la fourniture ou l'évacuation d'un fluide d'entraînement au système de canal de fluide (43).

6. Dispositif d'accouplement selon la revendication 5, **caractérisé en ce que** le système de canal de fluide (43) présente deux canaux annulaires (42a, 42b) réalisés coaxialement à l'évidement d'accouplement (6) dans le corps de base (25), qui sont reliés respectivement à une des deux chambres d'entraînement (85a, 85b) d'un vérin de travail (83) respectif et qui sont reliés en outre respectivement à une ouverture de raccordement (87a, 87b) permettant une fourniture et une évacuation du fluide d'entraînement, débouchant au niveau d'une surface extérieure (77) du corps de base (25).

7. Dispositif d'accouplement selon l'une quelconque des revendications 1 à 6, **caractérisé en ce que** la couronne dentée d'entraînement (72) est réalisée en forme d'anneau fermée en soi et est agencée au niveau de la surface périphérique extérieure (73) radiale de la douille d'actionnement (55) en orientation coaxiale par rapport à celle-ci.

8. Dispositif d'accouplement selon l'une quelconque des revendications 1 à 7, **caractérisé en ce que** la structure d'actionnement (58) présente au moins un nombre de sections d'actionnement (66) correspondant au nombre de pistons d'entraînement (67) qui possède respectivement une cavité de réception (62) ouverte vers l'évidement d'accouplement (6) et une rampe (64) contiguë dans le sens périphérique de la douille d'actionnement (55) à la cavité de réception (62) avec une surface de rampe (63) courbée s'approchant de l'axe longitudinal central (7) de l'évidement d'accouplement (6) à mesure que la distance de la cavité de réception (62) augmente, dans lequel l'élément de verrouillage (45) associé peut plonger ou plonge dans la position de libération dans la cavité de réception (62) ou repose dans la position de verrouillage contre la surface de rampe (63).

9. Dispositif d'accouplement selon l'une quelconque des revendications 1 à 8, **caractérisé en ce qu'**il présente un dispositif d'actionnement manuel (88) pour susciter manuellement le mouvement d'actionnement (56) rotatif de la douille d'actionnement (55) qui présente un anneau d'actionnement manuel (91) logé de manière rotative au niveau du corps de base (25) par rapport à l'axe longitudinal central (7) de l'évidement d'accouplement (6) qui est relié sans pouvoir tourner à la douille d'actionnement (55).

10. Dispositif d'accouplement selon la revendication 9, **caractérisé en ce que** l'anneau d'actionnement manuel (91) présente une section d'actionnement (93) annulaire entourant coaxialement le corps de base (25) et un ou plusieurs bras d'entraînement (94) dépassant radialement vers l'intérieur à partir de cette section d'actionnement (93) qui viennent en prise respectivement dans un évidement d'entraînement (96) de la douille d'actionnement (55).

11. Dispositif d'accouplement selon l'une quelconque des revendications 1 à 10, **caractérisé en ce que** les éléments de verrouillage (45) sont réalisés en forme de sphère et sont logés respectivement dans un canal de guidage (46) orienté radialement par rapport à l'axe longitudinal central (7) du corps de base (25) pour la réalisation du mouvement de travail (48).

12. Dispositif d'accouplement selon l'une quelconque des revendications 1 à 11, **caractérisé en ce que** le premier composant d'accouplement (2) dispose, dans la zone d'un côté avant (13) axial, d'éléments de liaison (101, 102) électriques et/ou fluidiques qui sont reliés aux éléments de liaison antagonistes (104, 105) du second composant d'accouplement (3) verrouillé par les éléments de verrouillage (45) dans la position d'utilisation enfichée.

13. Dispositif d'accouplement selon l'une quelconque des revendications 1 à 12, **caractérisé en ce que** les éléments de liaison (101, 102) électriques et/ou fluidiques sont agencés au niveau d'un support d'élément de liaison (107) annulaire coaxial à l'évidement d'accouplement (6), qui est mobile par rapport au corps de base (25) en réalisant un mouvement de levage axial (108) entre une position de base, dans laquelle les éléments de liaison (101, 102) électriques et/ou fluidiques sont rentrés dans le corps de base (25), et une position de liaison, dans laquelle les éléments de liaison (101, 102) électriques et/ou fluidiques sont sortis axialement du corps de base (25), dans lequel le support d'élément de liaison (107) est couplé en entraînement à la douille d'actionnement (55) de telle manière que le mouvement de levage axial (108) du support d'élément de liaison (107) soit dérivé du mouvement d'actionnement (56) rotatif de la douille d'actionnement (55).

14. Dispositif d'accouplement selon la revendication 13, **caractérisé en ce qu'**au moins une première section d'accouplement (114) en forme d'hélice est réalisée au niveau de la douille d'actionnement (55), avec laquelle au moins une seconde section d'accouplement (115) en forme d'hélice réalisée au niveau du support d'élément de liaison (107) est en prise, dans lequel le support d'élément de liaison (107) est bloqué en rotation par rapport au corps de base (25) de sorte que le mouvement d'actionnement (56) rotatif déclenche une opération de vissage générant le mouvement de levage axial (108).

15. Dispositif d'accouplement selon l'une quelconque des revendications 1 à 14, **caractérisé en ce que** le corps de base (25) du premier composant d'accouplement (2) présente un boîtier (26) annulaire et une douille de bride (28) insérée coaxialement dans le boîtier (26), dans lequel la douille de bride (28) présente une section de bride (32) logée axialement en amont du boîtier (26) et fixée au boîtier (26) ainsi qu'une section de douille (33) plongeant dans le boîtier (26), dans lequel la douille d'actionnement (55) est agencée coaxialement et de manière rotative entre le boîtier (26) et la section de douille (33) de la douille de bride (28), dans lequel la section de douille (33) est traversée radialement par des canaux de guidage (46) pour les éléments de verrouillage (45).
